# EUROPEAN PATENT APPLICATION

(11) **EP 4 461 172 A1**
(43) Date of publication of application: **13.11.2024**
(21) Application number: 23831665.7
(22) Date of filing: 10.03.2023
(51) Int. Cl.: A47J 36/32, G06N 3/08, G06V 10/10, G06V 20/68

(54) **ELECTRONIC DEVICE AND CONTROL METHOD THEREFOR**

(30) Priority: 27.06.2022 KR 20220078352
(71) Applicant: SAMSUNG ELECTRONICS CO., LTD., Yeongtong-gu Suwon-si, Gyeonggi-do 16677 (KR)
(72) Inventor: PARK, Sihyun, Suwon-si Gyeonggi-do 16677 (KR)
(74) Representative: Gulde & Partner
(86) International application number: PCT/KR2023/003329
(87) International publication number: WO 2024/005298

(57) **Abstract**

An electronic apparatus includes a camera; and at least one processor configured to: obtain, using the camera, an image captured by the camera, input the obtained image to an artificial intelligence model that is trained, obtain, using the artificial intelligence model, identification information of an object in the image and first accuracy information indicating a degree of recognition of the identification information, and update the artificial intelligence model based on a difference value between the obtained first accuracy information and second accuracy information corresponding to the identification information, wherein the second accuracy information indicates a reference degree of recognition associated with the identification information.

## Description

### [Technical Field]

The disclosure relates to an electronic apparatus for analyzing an image that includes an object for cooking using an artificial intelligence model, and a controlling method thereof. More particularly, the disclosure relates to an electronic apparatus that determines whether to update the artificial intelligence model based on a recognition accuracy of the object for cooking, and a controlling method thereof.

### [Background Art]

An artificial intelligence model may be used to specify an object for cooking included in an image, and to provide information associated with the specified object for cooking to a user. If an input image is applied to the artificial intelligence model as input data, the artificial intelligence model may output various information associated with the object for cooking included in the input image.

The artificial intelligence model may not only provide identification information that simply shows what the object for cooking included in the image is, but may also provide additional information associated with the object for cooking to the user, such as, for example and without limitation, a cooking method, a preserving method, precautions, and the like.

However, because cooking materials or cooking practices of users may change as time passes, there may be a problem of recognition accuracy dropping if the artificial intelligence model is not updated.

In addition, it may be difficult for the artificial intelligence model to maintain a high accuracy for all food ingredients. For example, in the case of bread, eggs, and the like, food ingredients may be well recognized, but in the case of atypical food ingredients (e.g., shark's fin) or food ingredients that are difficult to classify (e.g., chicken breasts, chicken thighs), recognition may be difficult.

Due to diverse environments of users (nationality, race, eating habits, etc.), it may be difficult for the artificial intelligence model to provide an analysis result of the object for cooking that satisfies a same level of accuracy to all users.

### [Disclosure]

### [Technical Problem]

Provided is an electronic apparatus that performs an update of an artificial intelligence model based on a difference between a first accuracy information obtained through an image and a pre-stored second accuracy information and a controlling method thereof.

Additional aspects will be set forth in part in the description which follows and, in part, will be apparent from the description, or may be learned by practice of the presented embodiments.

According to an aspect of the disclosure, an electronic apparatus includes: a camera; and at least one processor configured to: obtain, using the camera, an image captured by the camera, input the obtained image to an artificial intelligence model that is trained, obtain, using the artificial intelligence model, identification information of an object in the image and first accuracy information indicating a degree of recognition of the identification information, and update the artificial intelligence model based on a difference value between the obtained first accuracy information and second accuracy information corresponding to the identification information, wherein the second accuracy information indicates a reference degree of recognition associated with the identification information.

The second accuracy information may indicate the reference degree of recognition used in a training process of the updated artificial intelligence model.

The electronic apparatus may further include: at least one memory configured to store the artificial intelligence model; and a communication interface configured to communicate with a server, wherein the at least one processor may be further configured to: based on the difference value between the first accuracy information and the second accuracy information being greater than or equal to a threshold value, control the communication interface to transmit a signal requesting update information of the artificial intelligence model to the server, and based on the update information being received from the server through the communication interface, update the artificial intelligence model based on the received update information.

The electronic apparatus may further include: a display, wherein the at least one processor may be further configured to: based on the difference value being greater than or equal to the threshold value, control the display to display a user interface (UI) that guides an update of the artificial intelligence model, and based on a user input being received through the displayed UI, control the communication interface to transmit a signal requesting an update of the artificial intelligence model to the server.

The UI may include at least one from among the identification information, the first accuracy information, the second accuracy information, the difference value, or information inquiring of an update of the artificial intelligence model.

The at least one processor may be further configured to: based on the identification information of the object and the first accuracy information being obtained, control the communication interface to transmit a signal requesting the second accuracy information corresponding to the identification information to the server, and based on the second accuracy information corresponding to the identification information being received from the server through the communication interface, store the received second accuracy information in the at least one memory.

The at least one processor may be further configured to, based on the difference value being greater than or equal to the threshold value, control the communication interface to transmit the obtained image to the server to train the artificial intelligence model stored in the server.

The at least one processor may be further configured to: based on the identification information of the object, which is obtained based on a plurality of captured images obtained from the camera, being counted greater than or equal to a first threshold number of times, control the communication interface to transmit a signal requesting second update information of the artificial intelligence model corresponding to the identification information to the server, and based on the second update information corresponding to the identification information being received from the server through the communication interface, update the artificial intelligence model based on the received second update information.

The at least one processor may be further configured to: based on the identification information of the object, which is obtained based on at least one captured image obtained from the camera, being counted less than a second threshold number of times, control the communication interface to transmit a signal requesting second update information of the artificial intelligence model corresponding to the identification information to the server, and based on the second update information corresponding to the identification information being received from the server through the communication interface, update the artificial intelligence model based on the received second update information.

The electronic apparatus may further include: a chamber in which the object is disposed, wherein the at least one processor may be further configured to: obtain, using the camera, a first image capturing an inside of the chamber from a first viewpoint, obtain, using the camera, a second image capturing the inside of the chamber from a second viewpoint that is different from the first viewpoint, and obtain, as the first accuracy information, an average value of a first accuracy value of the object corresponding to the first image and a second accuracy value of the object corresponding to the second image.

According to an aspect of the disclosure, a controlling method of an electronic apparatus, includes: obtaining an image; inputting the obtained image in an artificial intelligence model that is trained; obtaining, using the artificial intelligence model, identification information of an object in the image and first accuracy information indicating a degree of recognition of the identification information; and updating the artificial intelligence model based on a difference value between the obtained first accuracy information and second accuracy information corresponding to the identification information, wherein the second accuracy information indicates a reference degree of recognition associated with the identification information.

The second accuracy information may indicate the reference degree of recognition used in a training process of the updated artificial intelligence model.

The controlling method may further include: based on the difference value between the first accuracy information and the second accuracy information being greater than or equal to a threshold value, transmitting a signal requesting update information of the artificial intelligence model to a server, wherein the updating the artificial intelligence model may include, based on the update information being received from the server, updating the artificial intelligence model based on the received update information.

The controlling method may further include: based on the difference value being greater than or equal to the threshold value, displaying a user interface (UI) that guides an update of the artificial intelligence model; and based on a user input being received through the displayed UI, transmitting a signal requesting an update of the artificial intelligence model to the server.

The UI may include at least one from among the identification information, the first accuracy information, the second accuracy information, the difference value, or information inquiring of an update of the artificial intelligence model.

### [Description of Drawings]

The above and other aspects, features, and advantages of certain embodiments of the present disclosure will be more apparent from the following description taken in conjunction with the accompanying drawings, in which:
FIG. 1 is a block diagram illustrating an electronic apparatus;
FIG. 2 is a block diagram illustrating in detail the electronic apparatus of FIG. 1;
FIG. 3 is a perspective diagram illustrating an electronic apparatus;
FIG. 4 is a diagram illustrating an inner configuration of a cooking chamber in which an object for cooking is cooked;
FIG. 5 is a diagram illustrating a system that includes an electronic apparatus, a server, a terminal device, and the like;
FIG. 6 is a diagram illustrating an operation of updating an artificial intelligence model based on an analysis result of an object for cooking;
FIG. 7 is a diagram illustrating input data and output data of an artificial intelligence model;
FIG. 8 is a diagram illustrating identification information;
FIG. 9 is a diagram illustrating accuracy information that is obtained from an electronic apparatus and accuracy information that is obtained from a server;
FIG. 10 is a flowchart illustrating an operation of updating an artificial intelligence model based on accuracy information;
FIG. 11 is a flowchart illustrating an operation of updating an artificial intelligence model taking into consideration a number of times of counting identification information;
FIG. 12 is a diagram illustrating information on object for cooking consisting of an analysis result of the object for cooking and a plurality of depths;
FIG. 13 is a flowchart illustrating an operation of receiving update information from a server;
FIG. 14 is a flowchart illustrating operations of various modules included in an electronic apparatus;
FIG. 15 is a flowchart illustrating an operation of an electronic apparatus displaying a UI that guides an update;
FIG. 16 is a flowchart illustrating an operation of a terminal device displaying a UI that guides an update;
FIG. 17 is a diagram illustrating a UI that guides an update;
FIG. 18 is a flowchart illustrating an operation of receiving second accuracy information from a server;
FIG. 19 is a flowchart illustrating an operation of transmitting an image to a server;
FIG. 20 is a diagram illustrating an operation of obtaining a user feedback;
FIG. 21 is a flowchart illustrating an operation of transmitting a signal that requests an image and an update to a server;
FIG. 22 is a flowchart illustrating an operation of performing an update by counting identification information;
FIG. 23 is a diagram illustrating an operation of displaying a UI that guides an update when identification information is counted greater than or equal to a first threshold number of times;
FIG. 24 is a diagram illustrating an operation of displaying a UI that guides an update when identification information is counted less than a second threshold number of times;
FIG. 25 is a flowchart illustrating an operation of updating an artificial intelligence model when identification information is initially recognized; and
FIG. 26 is a flowchart illustrating a controlling method of an electronic apparatus.

### [Detailed Description of Exemplary Embodiments]

The disclosure will be described in detail below with reference to the accompanying drawings.

Terms used in describing the various embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein are not to be understood simply as its designation but based on the meaning of the term and the overall context of the disclosure.

In the disclosure, expressions such as "have," "may have," "include," "may include," or the like are used to designate a presence of a corresponding characteristic (e.g., elements such as numerical value, function, operation, or component), and not to preclude a presence or a possibility of additional characteristics.

The expression at least one of A and/or B is to be understood as indicating any one of "A" or "B" or "A and B."

Expressions such as "first," "second," "1st," "2nd," and so on used herein may be used to refer to various elements regardless of order and/or importance. Further, it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to another element or as being coupled through other element (e.g., third element).

A singular expression includes a plural expression, unless otherwise specified. It is to be understood that the terms such as "consist" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used in the embodiments herein perform at least one function or operation, and may be implemented with a hardware or software, or implemented with a combination of hardware and software. Further, a plurality of "modules" or a plurality of "parts," except for a "module" or a "part" which needs to be implemented to a specific hardware, may be integrated to at least one module and implemented in at least one processor.

In this disclosure, the term "user" may refer to a person using an electronic apparatus or a device (e.g., artificial intelligence electronic apparatus) using the electronic apparatus.

Embodiments of the disclosure will be described in greater detail below with reference to the accompanied drawings.

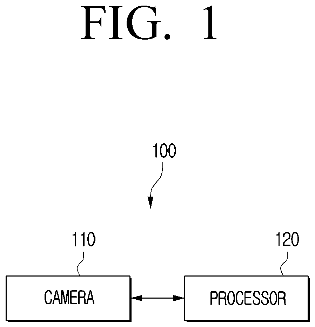

FIG. 1 is a block diagram illustrating an electronic apparatus 100.

Referring to FIG. 1, the electronic apparatus 100 may include at least one from among a camera 110 or a processor 120.

The electronic apparatus 100 may be a data processing device that stores an artificial intelligence model that analyzes an image. Here, the electronic apparatus 100 may store the artificial intelligence model on its own.

The electronic apparatus 100 may be a cooking device that cooks an object for cooking. For example, the cooking device may refer to an oven, an electric oven, a multi-oven, an electric stove, a microwave oven, and the like.

The electronic apparatus 100 according to various embodiments of the disclosure may include at least one from among, for example, a smartphone, a tablet personal computer (PC), a mobile telephone, a desktop PC, a laptop PC, a personal digital assistant (PDA), and a portable multimedia player (PMP). In some embodiments, the electronic apparatus 100 may include at least one from among, for example, a television, a digital video disk (DVD) player, and a media box (e.g., HomeSyncTM, Apple TVTM, or Google TVTM, etc.).

The camera 110 may be a configuration for capturing a subject and generating a captured image, and here, the captured image may be a concept that includes both a moving image and a still image. The camera 110 may obtain an image of at least one external device, and may be implemented with a camera, a lens, an infrared sensor, and the like.

The camera 110 may include a lens and an image sensor. Types of the lens may include a typical general-use lens, a wide angle lens, a zoom lens, and the like, and may be determined according to a type, a characteristic, a use environment, and the like of the electronic apparatus 100. For the image sensor, a complementary metal oxide semiconductor (CMOS), a charge coupled device (CCD), and the like may be used.

The camera 110 may output light incident as an image signal. Specifically, the camera 110 may include a lens, pixels, and an AD converter. The lens may collect light of a subject and focus an optical image in an imaging area, and pixels may output light incident through the lens to an image signal of an analog form. Then, the AD converter may convert and output the image signal of the analog form to an image signal of a digital form.

The camera 110 may generate a captured image by capturing the object for cooking located inside the electronic apparatus 100.

In describing the electronic apparatus 100 according to an embodiment of the disclosure, the camera 110 has been described as one, but a plurality of cameras may be disposed at an actual implementation.

At least one processor 120 may perform an overall control operation of the electronic apparatus 100. Specifically, the processor 120 may function controlling the overall operation of the electronic apparatus 100. The at least one processor 120 will be described as the processor 120 below.

The processor 120 may be implemented as a digital signal processor (DSP) for processing a digital signal, a microprocessor, or a time controller (TCON). However, the embodiment is not limited thereto, and may include, for example, and without limitation, one or more from among a central processing unit (CPU), a micro controller unit (MCU), a micro processing unit (MPU), a controller, an application processor (AP), a graphics-processing unit (GPU) or a communication processor (CP), an advanced reduced instruction set computer (RISC) machines (ARM) processor, or may be defined by the corresponding term. In addition, the processor 120 may be implemented as a System on Chip (SoC) or a large scale integration (LSI) in which a processing algorithm is embedded, and may be implemented in the form of a field programmable gate array (FPGA). In addition, the processor 120 may perform various functions by executing computer executable instructions stored in a memory.

The processor 120 may obtain a captured image from the camera 110, obtain identification information of the object for cooking included in the image and first accuracy information showing a degree of recognition (recognition degree) of the identification information by inputting the obtained image in a trained artificial intelligence model, and update the artificial intelligence model based on a difference value between the obtained artificial intelligence model and second accuracy information that corresponds to the identification information, and the second accuracy information may be information showing a reference degree of recognition associated with the identification information.

Here, the processor 120 may obtain an image. Then, the processor 120 may perform an analysis operation based on the obtained image. Specifically, the processor 120 may input (or apply) the image in the artificial intelligence model as input data. Here, the processor 120 may obtain identification information (e.g., salmon fillets) of the object for cooking included in the image and first accuracy information (91.6%) that corresponds to the identification information as output data.

According to an embodiment, the processor 120 may directly obtain the image through the camera 110 included in the electronic apparatus 100.

According to another embodiment, the processor 120 may obtain an image in which the object for cooking is captured through an external device or the like. That is, the electronic apparatus 100 may not include the camera 110, and the image input (or applied) to the artificial intelligence model may be obtained through the external device, or the like.

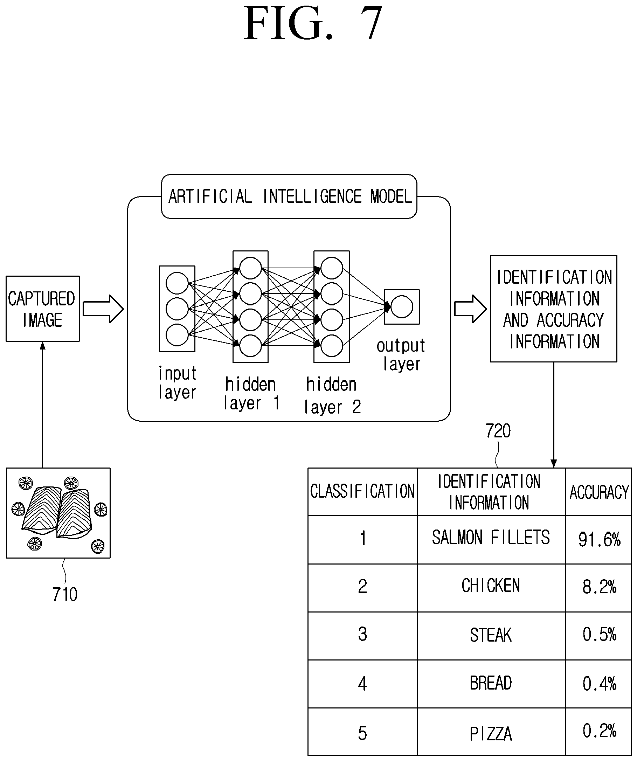

Here, the artificial intelligence model may receive input of the image and output an analysis result of the object for cooking included in the image. The analysis result may include identification information and first accuracy information. An analysis operation through the artificial intelligence model will be described in FIG. 7.

Here, the first accuracy information may refer to a recognition degree or a recognition reliability by which the object for cooking included in the image is determined as the identification information (e.g., salmon fillets). The accuracy information may be described as accuracy, an accuracy value, a recognition degree, a recognition value, a recognition rate, and the like.

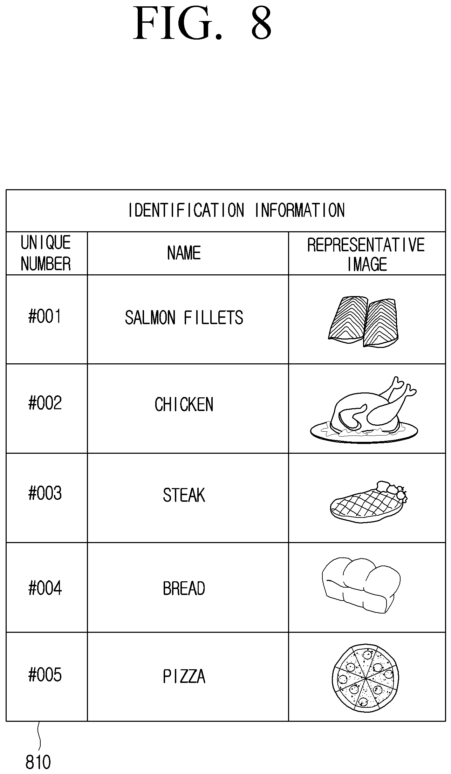

Here, the identification information may refer to information for specifying the object for cooking. The identification information may include at least one from among a unique number, a name, and a representative image. Description associated with the identification information will be described in FIG. 8.

Here, when the identification information of the object for cooking included in the image is obtained, the processor 120 may obtain the second accuracy information which is different from the first accuracy information. Here, the second accuracy information may be a reference value that is compared with the first accuracy information. In addition, the second accuracy information may vary according to the identification information (or object for cooking). For example, the second accuracy information corresponding to the salmon fillets and the second accuracy information corresponding to half a potato may vary.

The second accuracy information may be described as a reference degree of recognition, a reference accuracy, a comparable reference value, and the like.

According to an embodiment, the second accuracy information may be information pre-stored in the electronic apparatus 100. The processor 120 may store the second accuracy information in a memory 130. Then, the processor 120 may search (or identify) the second accuracy information according to a specific event (an event in which specific identification information is obtained).

According to another embodiment, the second accuracy information may be information received through an external device (e.g., a server 200). The processor 120 may request for the second accuracy information to the external device according to the specific event (e.g., an event in which the specific identification information is obtained). Then, the processor 120 may receive the second accuracy information from the external device.

The second accuracy information may be information showing the reference degree of recognition used in a learning process of an updated artificial intelligence model.

According to an embodiment, the second accuracy information may show the reference degree of recognition used in a pre-updated artificial intelligence model. A new second artificial intelligence model (e.g., an already updated model) that is different from a first artificial intelligence model (e.g., a model prior to an update) that is being used in the electronic apparatus 100 may be present. Here, the processor 120 may store the second accuracy information that is used in the new second artificial intelligence model. Then, the processor 120 may obtain the first accuracy information by using the first artificial intelligence model that is currently being used. In addition, the processor 120 may obtain the second accuracy information used in an already updated second artificial intelligence model. Then, the processor 120 may determine whether to update the first artificial intelligence model to the second artificial intelligence model by comparing the first accuracy information and the second accuracy information. If a difference value obtained by subtracting the first accuracy information from the second accuracy information is greater than or equal to a threshold value, the processor 120 may update the first artificial intelligence model to the second artificial intelligence model. Here, the second artificial intelligence model has been described as already stored in the electronic apparatus 100. According to another embodiment, the electronic apparatus 100 may store only the second accuracy information, and the server 200 may store all information associated with the second artificial intelligence model. In this case, the processor 120 may request for the second artificial intelligence model to the server 200.

According to another embodiment, the second accuracy information may be an average value of the accuracy values of the object for cooking obtained from a plurality of electronic apparatuses (e.g., user terminal device), respectively. For example, the second accuracy information may be an average value of an accuracy value of the object for cooking obtained from a first electronic apparatus and an accuracy value of the object for cooking obtained from a second electronic apparatus from among the plurality of electronic apparatuses. The plurality of electronic apparatuses may refer to a cooking device used by a plurality of users, respectively. Here, the second accuracy information may be information generated based on data received from the plurality of users. For example, an average accuracy information of the plurality of users may be calculated based on use history information of the plurality of users. The second accuracy information may refer to an average accuracy of the plurality of users associated with specific identification information.

The electronic apparatus 100 may further include a communication interface 140 that communicates with the memory 130 and the server 200 that stores the trained artificial intelligence model, and the at least one processor 120 may transmit, based on the difference value between the first accuracy information and the second accuracy information being greater than or equal to the threshold value, a signal requesting update information of the artificial intelligence model to the server 200 through the communication interface 140, and update, based on update information being received from the server 200, the artificial intelligence model based on the received update information.

The electronic apparatus 100 may store the trained artificial intelligence model in the memory 130. Then, when a specific event (e.g., image analyzing event) is identified, the processor 120 may perform the image analyzing operation by using the artificial intelligence model stored in the memory 130. Here, the processor 120 may determine whether to update the artificial intelligence model based on a result of the image analyzing operation.

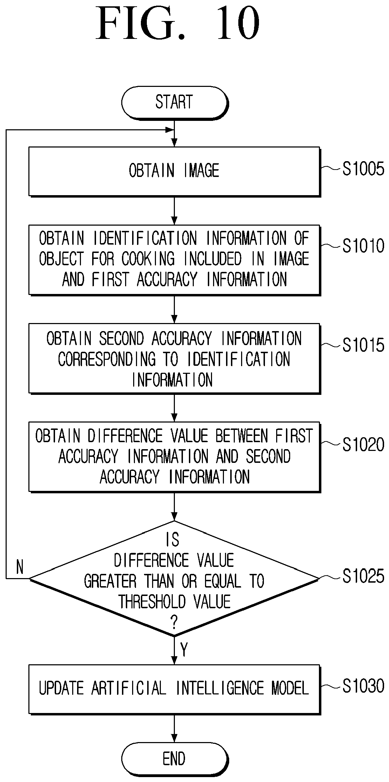

Specifically, the processor 120 may determine whether to update the artificial intelligence model based on the difference value between the first accuracy information and the second accuracy information. The operation of determining whether to update based on the difference value will be described in FIG. 10.

Here, the processor 120 may obtain update information for the update. The update information may refer to information necessary in updating the artificial intelligence model. Here, an update operation may be a meaning that includes changing, modifying, substituting, updating, generating, and the like of the artificial intelligence model.

A range of information referred to by the update information may vary.

According to an embodiment, the update information may refer to a whole artificial intelligence model. The processor 120 may delete an existing artificial intelligence model by obtaining the update information and install a new artificial intelligence model.

According to another embodiment, the update information may refer to information used in recognizing a specific object for cooking. The processor 120 may modify a portion of data of the existing artificial intelligence model to new data by obtaining the update information.

According to still another embodiment, the update information may refer to information corresponding to a specific depth from among information used in recognizing the object for cooking.

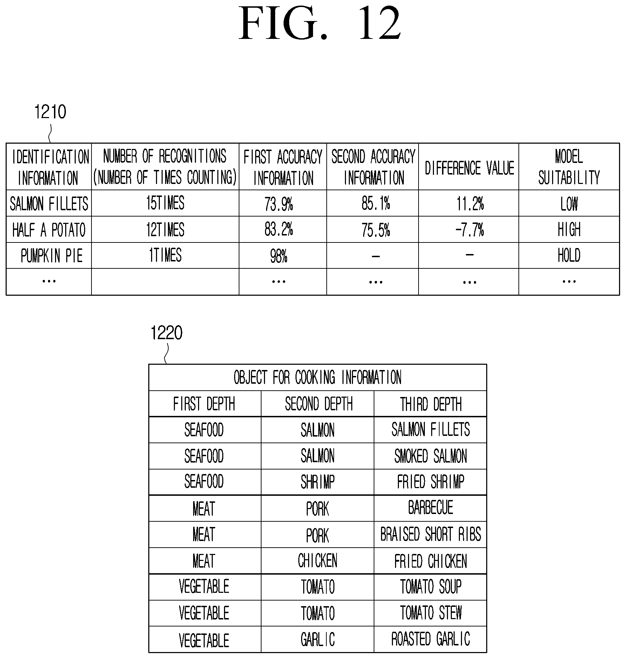

The object for cooking as in table 1220 in FIG. 12 may be divided into a plurality of depths. The respective depths may refer to a category used in dividing the object for cooking.

The artificial intelligence model may identify the object for cooking as one from among items (e.g., seafood, meat, vegetable, etc.) belonging in a first depth based on information corresponding to the first depth which has a widest range.

In addition, the artificial intelligence model may identify the object for cooking as one from among items (e.g., if the first depth is a seafood, a second depth may be a salmon, a shrimp, and the like) belonging in the second depth based on information corresponding to the second depth which is narrower in range than the first depth.

In addition, the artificial intelligence model may identify the object for cooking as one from among items (e.g., if the second depth is a salmon, a third depth may be salmon fillets, smoked salmon, and the like) belonging in the third depth based on information corresponding to the third depth which is narrower in range than the second depth.

The update information may include information corresponding to at least one depth from among the plurality of depths. Here, information of which depth from among the plurality of depths is being obtained as update information may vary according to a user setting.

The electronic apparatus 100 may further include a display 150, and the at least one processor 120 may control, based on the difference value being greater than or equal to the threshold value, the display 150 to display a user interface (UI) that guides the update of the artificial intelligence model, and transmit, based on a user input being received through the displayed UI, the signal requesting the update of the artificial intelligence model to the server 200 through the communication interface 140.

Here, the user input (or a user feedback) may be directly received from the electronic apparatus 100. According to another embodiment, the user input (or the user feedback) may be received by a terminal device 300 and transmitted to the electronic apparatus 100.

Here, if the difference value between the first accuracy information and the second accuracy information is greater than or equal to the threshold value, the processor 120 may provide, to the user, a screen which includes a UI for guiding the update of the artificial intelligence model.

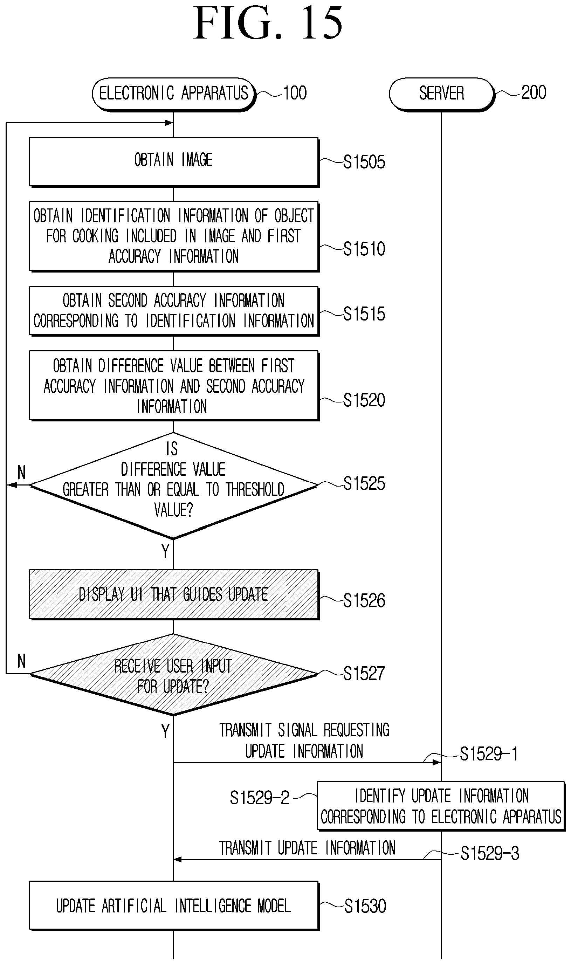

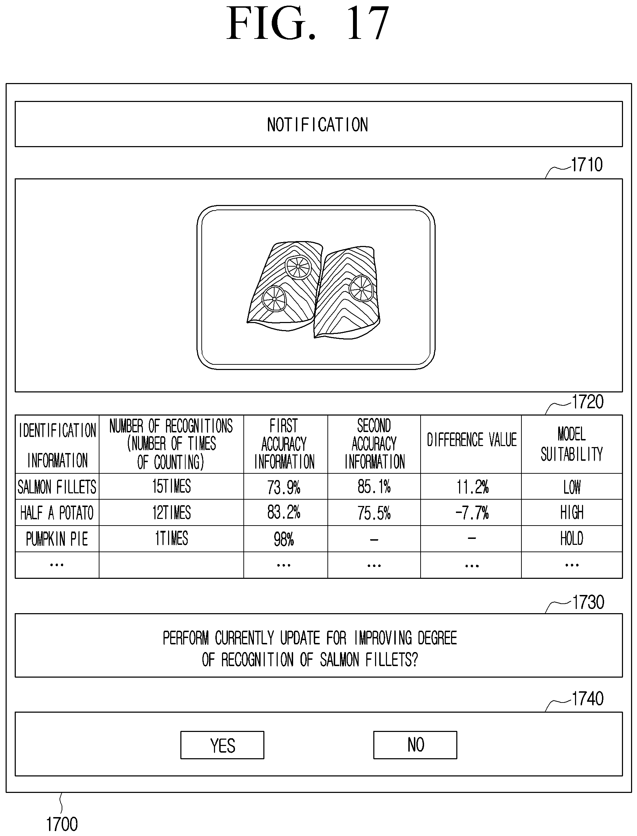

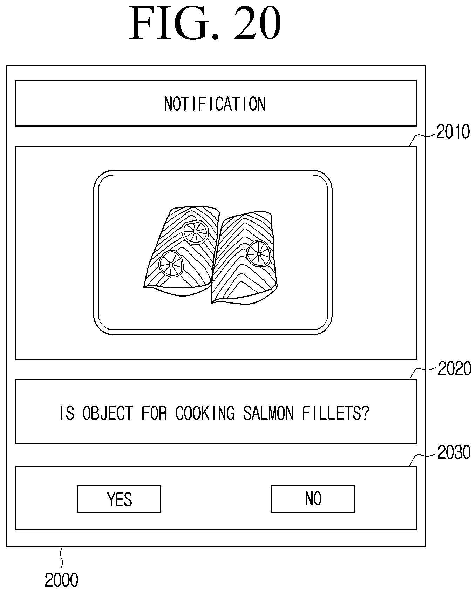

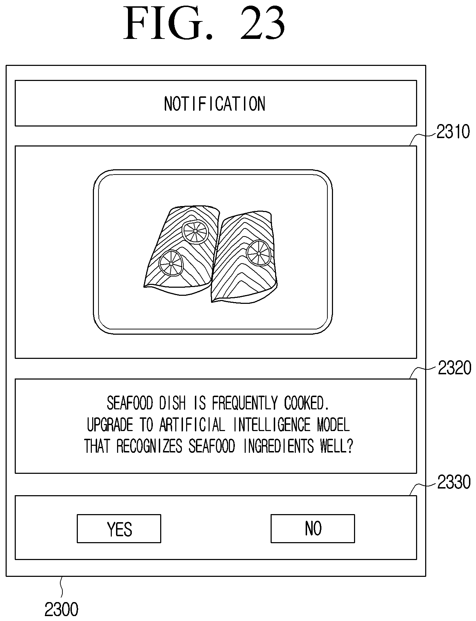

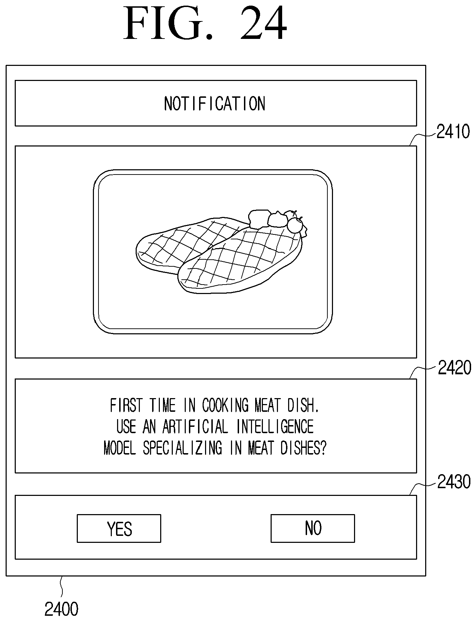

According to an embodiment, the UI may be provided to the user through the electronic apparatus 100. Descriptions associated therewith will be described with respect to FIG. 15. In addition to the UI that guides the update, various UIs for the user input or the user feedback (e.g., UI 1700 of FIG. 17, UI 2000 of FIG. 20, UI 2300 of FIG. 23, and UI 2400 of FIG. 24) may be provided to the user through the electronic apparatus 100.

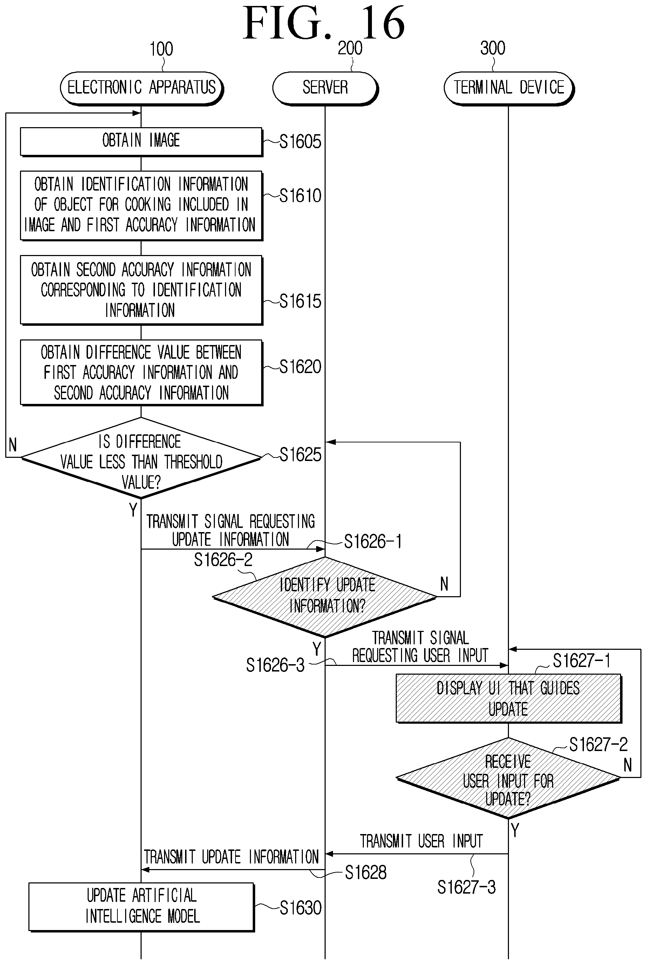

According to another embodiment, the UI may be provided to the user through the terminal device 300. Descriptions associated therewith will be described in FIG. 16. In addition to the UI that guides the update, various UIs for the user input or the user feedback (e.g., UI 1700 of FIG. 17, UI 2000 of FIG. 20, UI 2300 of FIG. 23, and UI 2400 of FIG. 24) may be provided to the user through the terminal device 300.

The UI may include at least one from among the identification information, the first accuracy information, the second accuracy information, the difference value, or information inquiring the update of the artificial intelligence model.

The screen including the UI that guides the update will be described in FIG. 17. Descriptions associated with the identification information, the first accuracy information, and the second accuracy information may be included in an analysis result 1720 of the object for cooking in FIG. 17. The information inquiring the update of the artificial intelligence model may refer to at least one from among information that guides the update 1730 or information for receiving the user input 1740.

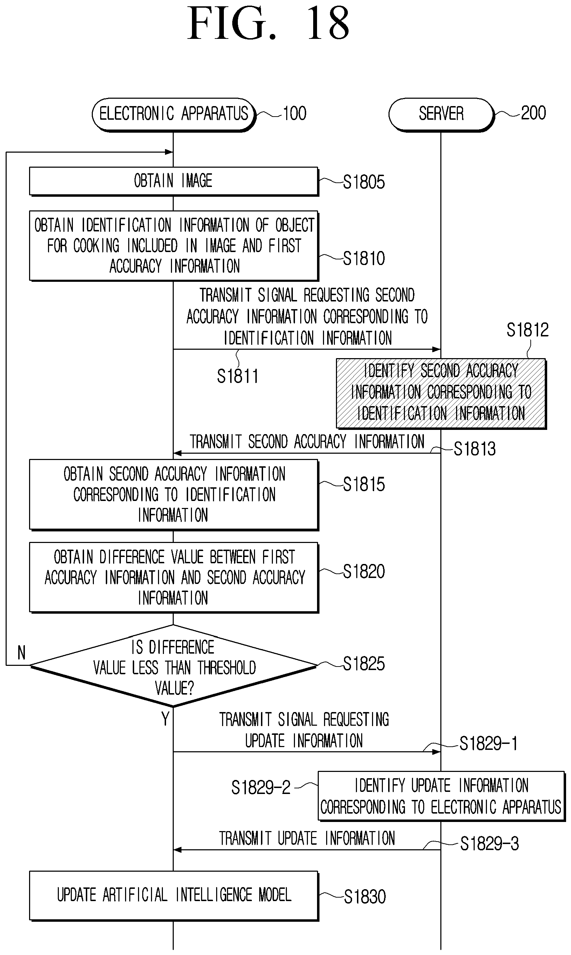

The electronic apparatus 100 may further include the memory 130, and the at least one processor 120 may transmit, based on the identification information of the object for cooking and the first accuracy information being obtained, a signal requesting the second accuracy information corresponding to the identification information to the server 200 through the communication interface 140, and store, based on the second accuracy information corresponding to the identification information being received from the server 200, the received second accuracy information in the memory 130. Descriptions associated therewith will be described in FIG. 18.

The at least one processor 120 may transmit, based on the difference value being greater than or equal to the threshold value, the obtained image to the server 200 through the communication interface 140 for the obtained image to be used in the training of the artificial intelligence model stored in the server 200.

Here, the obtained image may be included in learning data.

According to an embodiment, the processor 120 may transmit learning data to the server 200. The server 200 may perform a training (or re-training) operation based on learning data received from the electronic apparatus 100. Here, the learning data may include at least one from among the image, the identification information, or the user feedback. Descriptions associated therewith will be described in FIG. 17.

According to another embodiment, the processor 120 may re-train the artificial intelligence model on its own using the learning data. Here, the retraining operation may include an operation of changing (or adjusting) weight values.

According to still another embodiment, the processor 120 may transmit learning data to an edge equipment. The edge equipment may be a device that provides edge computing. The edge computing may refer to an operation of processing data generated from a terminal device based on a specific purpose. The edge equipment may be disposed at a periphery of the electronic apparatus 100 and may perform a data analysis function, a data processing function, and the like. For example, the edge equipment may retrain the artificial intelligence model using the learning data. Here, the edge equipment may be described as an edge node or an edge device. The edge equipment may exhibit a lower performance than the server 200, but may easily transmit data to and receive data from the electronic apparatus 100. The edge equipment may be implemented as a local-based network equipment such as a gateway, a router, and the like.

The processor 120 may perform an image analysis operation a plurality of times. Then, the processor 120 may perform counting of the identification information obtained every time the image analysis operation is performed. Then, whether to update may be determined based on a number of times of counting the identification information.

A counting operation may count an event in which specific identification information is recognized by the artificial intelligence model. Here, the counting operation may count an event in which a user input of selecting specific identification information is received even if the event is not recognized by the artificial intelligence model. For example, the counting operation may refer to counting identification information with a highest accuracy by the artificial intelligence model or identification information the user selected directly (through the UI).

According to an embodiment, if the number of times of counting the specific identification information is greater than or equal to a first threshold number of times, the processor 120 may determine the user as frequently using the specific identification information. If a device of the user who frequently uses the specific identification information is updated to better recognize the specific identification information, user satisfaction may become higher.

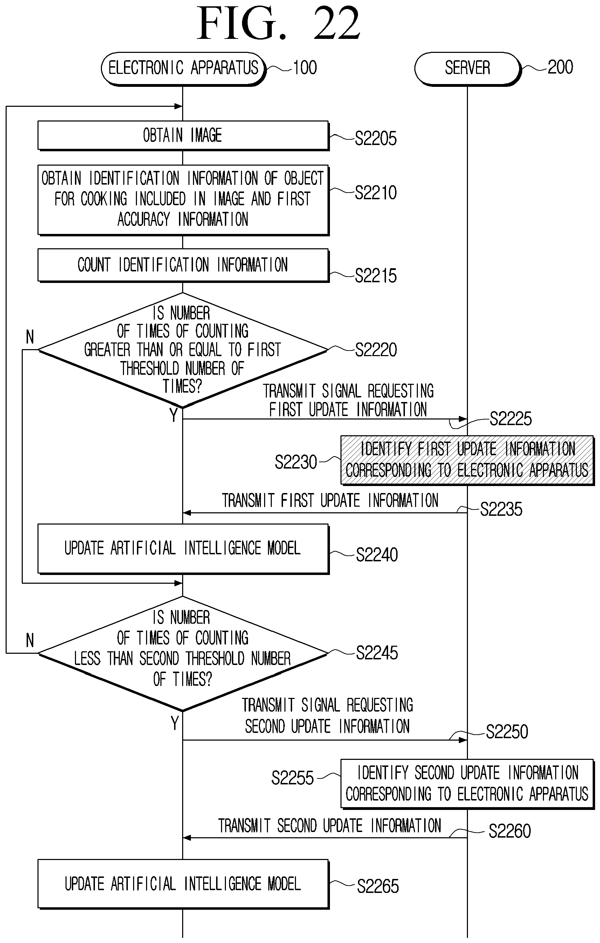

Specifically, the at least one processor 120 may transmit, based on the identification information of the object for cooking obtained based on a plurality of captured images obtained from the camera 110 being counted greater than or equal to the first threshold number of times, a signal requesting first update information of the artificial intelligence model corresponding to the identification information to the server 200 through the communication interface 140, and update, based on the first update information corresponding to the identification information being received from the server 200, the artificial intelligence model based on the received first update information. Descriptions associated therewith will be described in FIG. 22 and FIG. 23.

According to another embodiment, the processor 120 may identify, based on the number of times of counting the specific identification information being less than a second threshold number of times, as the user not frequently using the specific identification information. If the device of the user who does not frequently use the specific identification information is updated to accurately recognize the specific identification information in one try, the user may have a sense of satisfaction in the image analysis function.

Specifically, the at least one processor 120 may transmit, based on the identification information of the object for cooking obtained based on the at least one captured image obtained from the camera 110 being counted as less than the second threshold number of times, a signal requesting the second update information of the artificial intelligence model corresponding to the identification information to the server 200 through the communication interface 140, and update, based on the second update information corresponding to the identification information being received from the server 200, the artificial intelligence model based on the received second update information. Descriptions associated therewith will be described in FIG. 22 and FIG. 24.

The electronic apparatus 100 may further include a cooking chamber in which the object for cooking is contained, and the at least one processor 120 may obtain a first image which captured an inside of the cooking chamber from a first viewpoint from the camera 110, obtain a second image which captured the inside of the cooking chamber from a second viewpoint which is different from the first viewpoint from the camera 110, and obtain an average value of the first accuracy value of the object for cooking corresponding to the first image and the second accuracy value of the object for cooking corresponding to the second image as the first accuracy information.

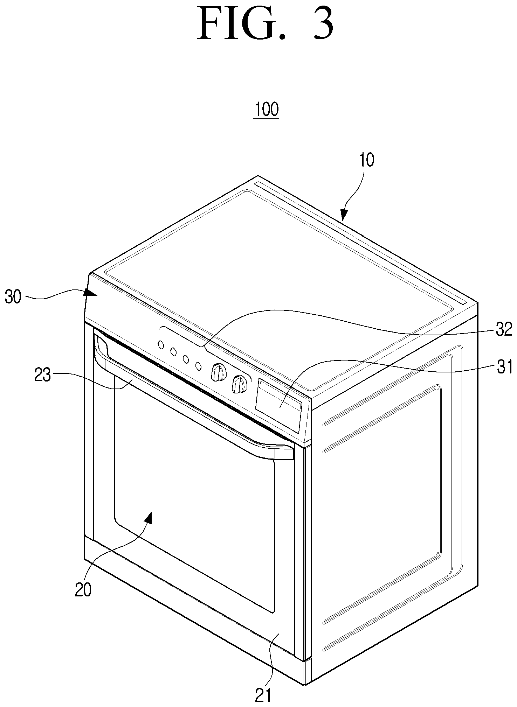

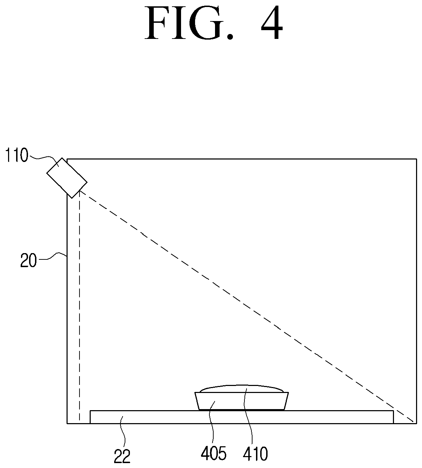

Description associated with the cooking chamber will be described in FIG. 3. The capturing operation through the camera 110 will be described in FIG. 4.

Here, the processor 120 may capture the same object for cooking from different viewpoints. The processor 120 may obtain an analysis result based on the image captured at different viewpoints. Then, the processor 120 may obtain and store an average of the accuracy value obtained at different viewpoints as the first accuracy information.

The electronic apparatus 100 may be a device that performs an image analysis using the artificial intelligence model, and may determine whether to update the artificial intelligence model based on a difference between the accuracy value (first accuracy information) obtained through the image and the pre-stored accuracy value (second accuracy information). Accordingly, the electronic apparatus 100 may perform the update operation based on a real-time accuracy of the object for cooking that is frequently used by the user. Further, the user may experience a higher level of satisfaction than when being updated at a pre-set cycle.

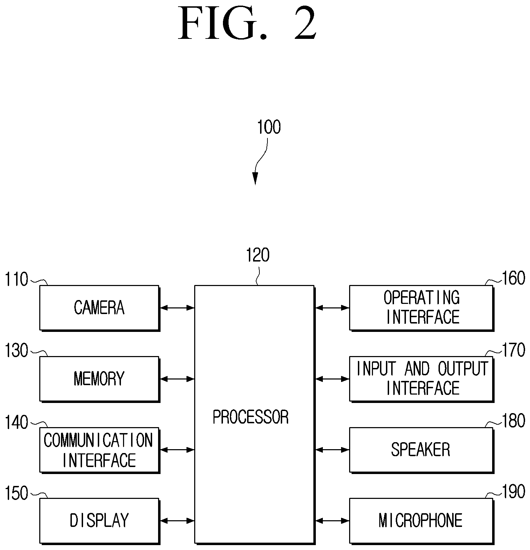

In the above, only a simple configuration that consists the electronic apparatus 100 has been shown and described, but various configurations may be additionally provided at implementation. Descriptions associated therewith will be described below with reference to FIG. 2.

FIG. 2 is a block diagram illustrating a detailed configuration of the electronic apparatus 100 of FIG. 1.

Referring to FIG. 2, the electronic apparatus 100 may include the camera 110, the processor 120, the memory 130, the communication interface 140, the display 150, an operating interface 160, an input and output interface 170, a speaker 180, and a microphone 190.

With respect to operations that are the same as those previously described from among the operations of the camera 110 and the processor 120, redundant descriptions will be omitted.

The memory 130 may be implemented as an internal memory such as, for example, and without limitation, a read only memory (ROM; e.g., electrically erasable programmable read-only memory (EEPROM)), a random access memory (RAM), or the like, included in the processor 120 or implemented as a memory separate from the processor 120. In this case, the memory 130 may be implemented in a form of a memory embedded to the electronic apparatus 100, or implemented in the form of the memory that is attachable to or detachable from the electronic apparatus 100 according to data storage use. For example, the data for driving of the electronic apparatus 100 may be stored in a memory embedded to the electronic apparatus 100, and data for an expansion function of the electronic apparatus 100 may be stored in a memory attachable to and detachable from the electronic apparatus 100.

The memory embedded in the electronic apparatus 100 may be implemented as at least one from among a volatile memory (e.g., a dynamic RAM (DRAM), a static RAM (SRAM), or a synchronous dynamic RAM (SDRAM)), or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard disk drive (HDD) or a solid state drive (SSD)), and in the case of the memory that is attachable to and detachable from the electronic apparatus 100, the memory may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

The memory 130 may store at least one instruction. The processor 120 may perform various operations based on the instructions stored in the memory 130.

The communication interface 140 may be a configuration that performs communication with external devices of various types according to communication methods of various types. The communication interface 140 may include a wireless communication module or a wired communication module. Here, each communication module may be implemented in a form of at least one hardware chip.

The wireless communication module may be a module that communicates with the external device by wirelessly means. For example, the wireless communication module may include at least one module from among a Wi-Fi module, a Bluetooth module, an infrared module, or other communication modules.

The Wi-Fi module and the Bluetooth module may perform communication in a Wi-Fi method and a Bluetooth method, respectively. When using the Wi-Fi module or the Bluetooth module, various connection information such as, for example, and without limitation, a service set identifier (SSID), a session key, and the like may be first transmitted and received, and various information may be transmitted and received after communicatively connecting using the same.

The infrared communication module may perform communication according to an infrared data association (IrDA) technology of wirelessly transmitting data short range using the infrared rays present between visible rays and millimeter waves.

Other communication modules may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like in addition to the above-described communication methods.

The wired communication module may be a module that communicates with the external device by wired means. For example, the wired communication module may include at least one from among a local area network (LAN) module, an Ethernet module, a pair cable, a coaxial cable, an optical fiber cable, or an ultra wide-band (UWB) module.

The display 150 may be implemented as a display of various types such as, for example, and without limitation, a liquid crystal display (LCD), an organic light emitting diode (OLED) display, a plasma display panel (PDP), or the like. In the display 150, a driving circuit, which may be implemented in the form of an amorphous silicon thin film transistor (a-si TFT), a low temperature poly silicon (LTPS) TFT, an organic TFT (OTFT), or the like, a backlight unit, and the like may be included. The display 150 may be implemented as a touch screen coupled with a touch sensor, a flexible display, a three-dimensional display (3D display), or the like. In addition, according to an embodiment of the disclosure, the display 150 may include not only a display panel that outputs an image, but also a bezel that houses the display panel. Specifically, according to an embodiment of the disclosure, the bezel may include a touch sensor for sensing a user interaction.

The operating interface 160 may be implemented as a device such as a button, a touch pad, a mouse, and a keyboard, or implemented also as a touch screen capable of performing the above-described display function and an operation input function together therewith. Here, the button may be a button of various types such as a mechanical button, a touch pad, or a wheel which is formed at a random area at a front surface part or a side surface part, a rear surface part, or the like of an exterior of a main body of the electronic apparatus 100.

The input and output interface 170 may be any one interface from among a high definition multimedia interface (HDMI), a mobile high-definition link (MHL), a universal serial bus (USB), a display port (DP), Thunderbolt, a video graphics array (VGA) port, an RGB port, a D-subminiature (D-SUB), or a digital visual interface (DVI). The input and output interface 170 may input and output at least one from among an audio signal and a video signal. According to an embodiment, the input and output interface 170 may include a port through which only the audio signal is input and output and a port through which only the video signal is input and output as separate ports, or may be implemented with one port through which both the audio signal and the video signal are input and output. The electronic apparatus 100 may transmit at least one from among the audio signal and the video signal to the external device (e.g., external display device or external speaker) through the input and output interface 170. Specifically, an output port included in the input and output interface 170 may be connected with the external device, and the electronic apparatus 100 may transit at least one from among the audio signal and the video signal to the external device through the output port.

Here, the input and output interface 170 may be connected with the communication interface. The input and output interface 170 may transmit information received from the external device to the communication interface or transmit information received through the communication interface to the external device.

The speaker 180 may be an element that not only outputs various audio data, but also various notification sounds, voice messages, and the like.

The microphone 190 may be a configuration for receiving input of a user voice or other sounds and converting to audio data. The microphone 190 may receive the user voice in an activated state. For example, the microphone 190 may be formed at an upper side of the electronic apparatus 100 or formed integrally at a front surface direction, a side direction, and the like. The microphone 190 may include various configurations such as, for example, and without limitation, a microphone that collects the user voice in an analog form, an amplification circuit that amplifies the collected user voice, an A/D converter circuit that samples the amplified user voice and converts to a digital signal, a filter circuit that removes noise components from the converted digital signal, and the like.

FIG. 3 is a perspective diagram illustrating the electronic apparatus 100.

Referring to FIG. 3, the electronic apparatus 100 is merely one example, and according to various embodiments of the disclosure, the electronic apparatus may be implemented to various forms.

As shown in FIG. 3, the electronic apparatus 100 may include a main body 10 which forms an exterior.

In addition, the electronic apparatus 100 may include a cooking chamber 20 opened toward one side. Here, the cooking chamber 20 may refer to a space (i.e., containing space) that contains the object for cooking (or food object). The cooking chamber 20 of the main body 10 may be the cooking chamber 20 in which the object for cooking is cooked, and the cooking chamber 20 may be opened toward a front of the electronic apparatus 100.

The cooking chamber 20 may be formed in a box shape, and a front surface may be opened for placing in or taking out the object for cooking. To this end, the front surface of the main body 10 may include an opening that is connected with the cooking chamber 20.

In this case, the front surface of the cooking chamber 20 may be opened and closed by a door 21 connected to the main body 10. To this end, the door 21 may be hinge coupled to a lower part of the main body 10 so as to be rotatable about the main body 10. In addition, the at a front surface upper part of the door 21, a door handle 23 may be provided for the user to grasp, and the user may grasp the door handle 23 to open and close the cooking chamber 20.

In addition, in the cooking chamber 20, a heater for heating the object for cooking may be provided. In this case, the heater may be an electric heater which includes an electric resistance. However, the heater is not limited to the electric heater, and may be a gas heater that generates heat by burning gas.

At the upper part of the main body 10, a control panel 30 may be disposed. The control panel 30 may include a display 31 that displays various operation information of the electronic apparatus 100 and receives input of a user command for controlling an operation of the electronic apparatus 100. In addition, the control panel 30 may include a button 32 that receives input of various user commands for controlling an operation of the electronic apparatus 100.

According to an embodiment of the disclosure, the electronic apparatus 100 may perform cooking of the object for cooking taking into consideration a size and a cooking state of the object for cooking inserted in the cooking chamber.

Specifically, the electronic apparatus 100 may determine a cooking time of the object for cooking according to a type of the object for cooking that the user selected through the control panel 30. At this time, the electronic apparatus 100 may determine a size of the object for cooking, and determine the cooking time according to the determined size. For example, even if the object for cooking is of a same type, the cooking time may be determined relatively shorter as the size of the object for cooking is smaller, and the cooking time may be determined relatively longer as the size of the objet for cooking is larger.

Then, the electronic apparatus 100 may determine the cooking state of the object for cooking while cooking of the object for cooking is in progress, and control the progress of cooking based on the cooking state.

Specifically, the electronic apparatus 100 may end, based on the cooking of the object for cooking being determined as completed according to a cooked degree of the object for cooking, cooking even if a set cooking time is yet completed. For example, the electronic apparatus 100 may determine the cooked degree of the object for cooking, and end cooking even if the cooking time is yet completed when cooking of the object for cooking is determined as completed according to the cooked degree of the object for cooking.

As described above, according to various embodiments of the disclosure, the cooking time is not determined taking into consideration only the type of the object for cooking, but different cooking times may be determined according to the size of the object for cooking even if the object for cooking is of the same type, and a time at which cooking is to be completed may be determined according to the cooking state of the object for cooking while cooking is in progress. Accordingly, the user may be able to cook, based on selecting only the type of the object for cooking that the user desires to cook even if an accurate cooking method is not known due to a difference in the size of the object for cooking, and the like, the object for cooking optimally without a monitoring of the cooking progress.

FIG. 4 is a diagram illustrating an inner configuration of a cooking chamber in which an object for cooking is cooked.

Referring to FIG. 4, an embodiment of a food object 410 being present inside the cooking chamber 20 of the electronic apparatus 100 may be assumed.

The food object 410 may be present inside a container 405, and the container 405 may be placed over a rack 22. Then, the camera 110 of the electronic apparatus 100 may capture at least one from among the rack 22, the container 405, or the food object 410.

A viewing angle may vary according to the type of the camera 110, but the camera 110 may be disposed to capture all of a whole area inside the cooking chamber 20.

According to an embodiment, the camera 110 may be attached to a wall surface of the cooking chamber 20 as shown in FIG. 4, and disposed in an inclined state toward a lower direction based on a certain angle. For example, the camera 110 may be disposed in the inclined state at a 45 degree angle toward the lower direction in a state attached to the wall surface of the cooking chamber 20.

According to another embodiment, the camera 110 may be attached to an upper plate (or ceiling) of the cooking chamber 20, and disposed toward the lower direction based on a certain angle. For example, the camera 110 may be disposed toward the lower direction while in the state attached to the upper plate of the cooking chamber 20.

Although the camera 110 in FIG. 4 is illustrated in a protruded state, the camera may be implemented in a form disposed inside the wall surface of the cooking chamber 20 or inside the upper plate of the cooking chamber 20 to protect the camera lens at actual implementation.

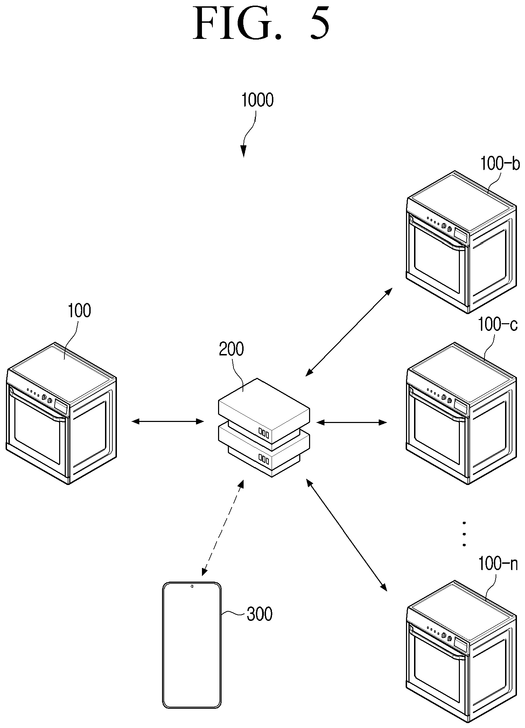

FIG. 5 is a diagram illustrating a system 1000 that includes the electronic apparatus 100, the server 200, the terminal device 300, and the like.

The system 1000 may include at least one from among the electronic apparatus 100, the server 200, the terminal device 300, or a plurality of electronic apparatuses 100-b to 100-n.

Here, the electronic apparatus 100 may perform communication with the server 200. Here, the server 200 may communicate with even the plurality of electronic apparatuses 100-b to 100-n in addition to the electronic apparatus 100. The server 200 may collect and analyze information of various devices by performing communication with not only the electronic apparatus 100, but also with the plurality of electronic apparatuses 100-b to 100-n.

The server 200 may perform communication with the terminal device 300. Here, the terminal device 300 may refer to a user device (e.g., smartphone, smart watch, etc.).

The electronic apparatus 100 or the terminal device 300 may display various information associated with the electronic apparatus 100. For example, the electronic apparatus 100 or the terminal device 300 may display a UI requesting user feedback or user input associated with the update. Whether to display the UIin the electronic apparatus 100 or display the UI in the terminal device 300 may be determined according to the various embodiments.

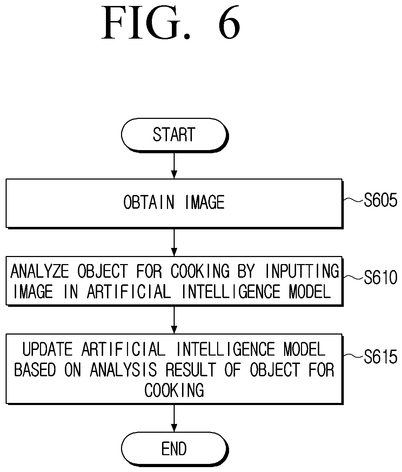

FIG. 6 is a diagram illustrating an operation of updating an artificial intelligence model based on an analysis result of an object for cooking.

Referring to FIG. 6, the electronic apparatus 100 may obtain an image (S605). Here, the image may include the object for cooking. The electronic apparatus 100 may obtain an image in which the object for cooking is included. In an example, the electronic apparatus 100 may obtain an image captured through the camera 110 disposed in the electronic apparatus 100. In another example, the electronic apparatus 100 may receive the image included with the object for cooking from an external device (e.g., server 200).

In addition, the electronic apparatus 100 may analyze the object for cooking by inputting the image in the terminal device 300 (S610). The electronic apparatus 100 may analyze the object for cooking included in the image through an artificial intelligence model. The electronic apparatus 100 may obtain an image analysis result (or, an object for cooking analysis result) through the artificial intelligence model. Specifically, the electronic apparatus 100 may input the image in the artificial intelligence model as input data, and obtain identification information of the object for cooking included in the image and accuracy information corresponding to the identification information as output data.

In addition, the electronic apparatus 100 may update the artificial intelligence model based on the image analysis result (object for cooking analysis result) (S615). The electronic apparatus 100 may obtain identification information showing (indicating) the object for cooking and accuracy information corresponding to the identification information as the object for cooking analysis result. The electronic apparatus 100 may determine whether to update the artificial intelligence model based on the accuracy information. Detailed descriptions associated therewith will be described in FIG. 10.

FIG. 7 is a diagram illustrating input data and output data of an artificial intelligence model.

Referring to FIG. 7, the electronic apparatus 100 may obtain an image 710. Then, the electronic apparatus 100 may input the image 710 in the artificial intelligence model as input data. The artificial intelligence model may obtain identification information and accuracy information corresponding to the identification information as output data passing through an input layer, a hidden layer, a output layer, and the like.

For example, as illustrated in table 720, if the input image is an object for cooking that includes salmon, the artificial intelligence model may receive the image included with the object for cooking (salmon) as input data and obtain output data. Here, the output data may be identification information (salmon fillets) and accuracy information (91.6%) corresponding to the identification information (salmon fillets). The output data may include a plurality of identification information. The electronic apparatus 100 may obtain identification information (chicken) and accuracy information (8.2%), obtain identification information (steak) and accuracy information (0.5%), obtain identification information (bread) and accuracy information (0.4%), and identification information (pizza) and accuracy information (0.2%). The electronic apparatus 100 may identify that a likelihood the object for cooking included in the image 710, which is input data, being salmon fillets is 91.6%, a likelihood of the object for cooking being chicken is 8.2%, a likelihood of the object for cooking being steak is 0.5%, a likelihood of the object for cooking being bread is 0.4%, and a likelihood of the object for cooking being pizza is 0.2%

FIG. 8 is a diagram illustrating identification information.

Referring to table 810 in FIG. 8, the identification information may include at least one from among the unique number, the name, and the representative image. In FIG. 7, the identification information has been described as a name described in text, but actual identification information may include various information in addition to the name to specify a subject.

For example, the unique number of the salmon fillets may be #001, the unique number of chicken may be #002, the unique number of steak may be #003, the unique number of bread may be #004, and the unique number of pizza may be #005.

The electronic apparatus 100 may specify the object for cooking based on at least one from among the unique number, the name, or the representative image. The electronic apparatus 100 may store the analysis result associated with the image based on the identification information. In addition, the electronic apparatus 100 may display so as to provide the user with identification information.

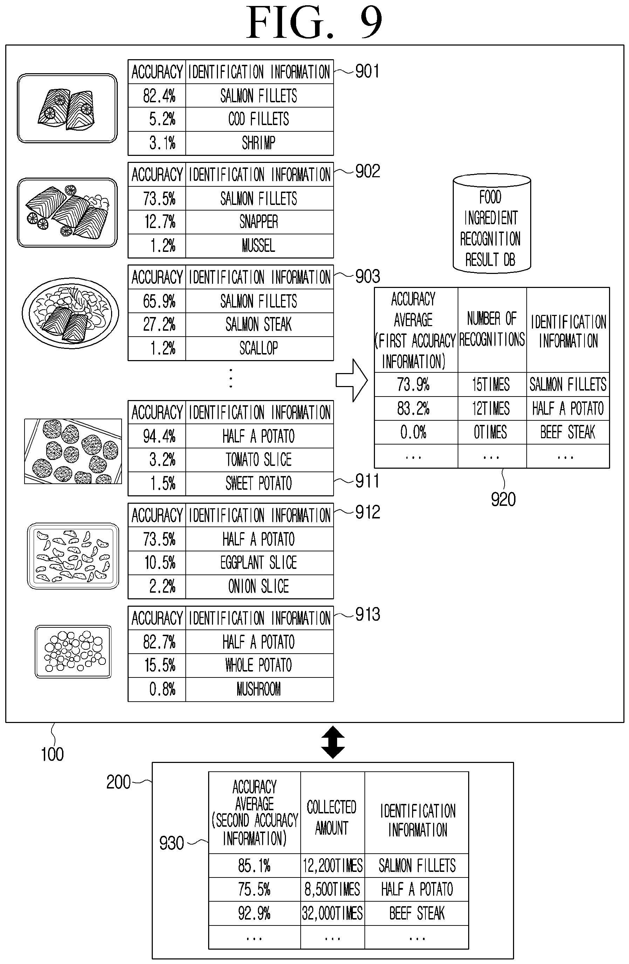

FIG. 9 is a diagram illustrating accuracy information that is obtained from the electronic apparatus 100 and accuracy information that is obtained from the server 200.

Referring to FIG. 9, the electronic apparatus 100 may perform an analysis operation of the image included with the object for cooking a plurality of times. The electronic apparatus 100 may recognize images different from one another as shown in the analysis results 901, 902, and 903 as salmon fillets. In addition, the electronic apparatus 100 may recognize images different from one another as shown in the analysis results 911, 912, and 913 as half a potato.

The electronic apparatus 100 may perform counting of the identification information having a highest accuracy when the analysis result is obtained.

The electronic apparatus 100 may obtain a plurality of analysis results 901, 902, 903, ... , 911, 912, and 913 based on the image analysis operation of a plurality of times, and obtain an object for cooking recognition result 920 by combining the obtained plurality of analysis results. The object for cooking recognition result may be described as an overall analysis result, an overall result, or the like.

For example, the electronic apparatus 100 may identify that the salmon fillets are recognized 15 times, and that the accuracy average is 73.9%. In addition, the electronic apparatus may identify that the half a potato is recognized 12 times, and that the accuracy average is 83.2%. The object for cooking recognition result 920 may be stored with information that a specific object for cooking (beef steak) has never been recognized. According to another embodiment, while in a state in which information associated with the specific object for cooking (beef steak) is not stored, the electronic apparatus 100 may identify that the beef steak is not recognized based on the object for cooking recognition result. In an example, each of the analysis results 901, 902, 903, ... , 911, 912, and 913 may be described as the first accuracy information. In another example, the object for cooking recognition result 920 may be described as the first accuracy information.

Here, the electronic apparatus 100 may transmit the object for cooking recognition result 920 to the server 200. The server 200 may store reference information 930 based on the object for cooking recognition result received from the plurality of electronic apparatuses. The server 200 may obtain the reference information 930 based on the identification information and the accuracy information of the object for cooking recognized from the plurality of electronic apparatuses (plurality of users). Here, the reference information 930 may be described as the second accuracy information. The server 200 may transmit the reference information 930 to the electronic apparatus 100.

FIG. 10 is a flowchart illustrating an operation of updating an artificial intelligence model based on accuracy information.

Referring to FIG. 10, the electronic apparatus 100 may obtain an image (S1005). Here, the image may include the object for cooking.

Here, the electronic apparatus 100 may obtain identification information of the object for cooking included in the image and first accuracy information corresponding to the identification information (S1010). Here, the first accuracy information may refer to a likelihood value by which the object for cooking is to be recognized as the identification information.

Here, the electronic apparatus 100 may obtain the second accuracy information corresponding to the identification information (S1015). The second accuracy information may show the reference degree of recognition of a specific object for cooking (specific identification information).

Here, the electronic apparatus 100 may obtain the difference value between the first accuracy information and the second accuracy information (S1020). The electronic apparatus 100 may obtain a value of subtracting the first accuracy information from the second accuracy information as the difference value.

Here, the electronic apparatus 100 may identify whether the difference value obtained from step S1020 is greater than or equal to the threshold value (S1025). If the difference value is greater than or equal to the threshold value (S1025-Y), the electronic apparatus 100 may update the artificial intelligence model (S1030). If the difference value is less than the threshold value (S1025-N), the electronic apparatus 100 may obtain a new image and perform the step S1005 to step S1025.

For example, if the difference value is a value (e.g., 11.2%) that is greater than the threshold value (e.g., 10%), the electronic apparatus 100 may update the artificial intelligence model.

According to an embodiment of subtracting the first accuracy information from the second accuracy information which is described in FIG. 10, a model suitability may be higher as the difference value is smaller.

According to another embodiment, the electronic apparatus 100 in step S1020 may obtain the difference value in a different calculation method. The electronic apparatus 100 may obtain a value of subtracting the second accuracy information from the first accuracy information as the difference value. Here, the electronic apparatus 100 may update the artificial intelligence model if the difference value is less than the threshold value. According to an embodiment of subtracting the second accuracy information from the first accuracy information, the model suitability may be higher as the difference value is greater.

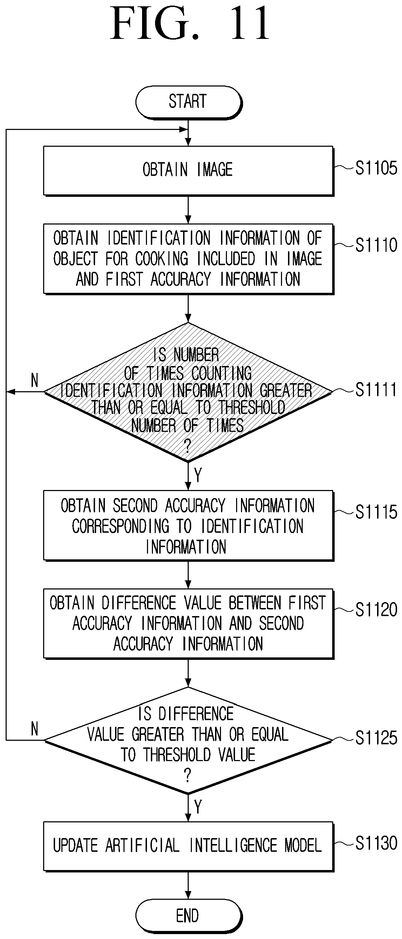

FIG. 11 is a flowchart illustrating an operation of updating an artificial intelligence model taking into consideration a number of times identification information is counted.

Referring to FIG. 11, steps S1105, S1110, S1115, S1120, S1125, and S1130 may correspond to steps S1005, S1010, S1015, S1020, S1025, and S1030 in FIG. 10. Accordingly, redundant descriptions will be omitted.

After obtaining the identification information of the object for cooking included in the image and the first accuracy information (after step S1110), the electronic apparatus 100 may identify whether the number of times of counting the identification information is greater than or equal to a threshold number of times (S111). The electronic apparatus 100 may specify identification information of the object for cooking included in the image based on the artificial intelligence model, and obtain an accumulated number of times of counting the specified identification information.

For example, referring to table 1210 in FIG. 12, the accumulated number of times of counting may be stored per identification information in the electronic apparatus 100. For example, the number of times the salmon fillets are recognized may be 15 times, the number of times the half a potato is recognized may be 12 times, and the number of times a pumpkin pie is recognized may be 1 time.

If the number of times of counting the identification information is greater than or equal to the threshold number of times (S1 1 1 1-Y), the electronic apparatus 100 may obtain the second accuracy information corresponding to the identification information (S1115).

If the number of times of counting the identification information is less than the threshold number of times (S1111-N), the electronic apparatus 100 may obtain a new image and perform steps S1105 and S1110.

According to another embodiment, step S1111 may be performed after step S1115, step S1120, or step S1125.

FIG. 12 is a diagram illustrating information on object for cooking consisting of an analysis result of the object for cooking and a plurality of depths.

Table 1210 in FIG. 12 may include the object for cooking analysis result. Here, the object for cooking analysis result may include the model suitability based on the difference value between the first accuracy information and the second accuracy information. The model suitability may refer to a degree that shows how accurately the artificial intelligence model that is installed (stored) currently in the electronic apparatus recognizes the object for cooking.

If an image including salmon fillets is obtained, the electronic apparatus 100 may use the artificial intelligence model and identify that the identification information is salmon fillets, the first accuracy information is 73.9%, and the second accuracy information is 85.1%. Here, the electronic apparatus 100 may identify the difference value (11.2%) by subtracting the first accuracy information from the second accuracy information. Because the difference value (11.2%) is greater than or equal to the threshold value (e.g., 10%), the electronic apparatus 100 may determine that a suitability of the artificial intelligence model is low.

If an image including the half a potato is obtained, the electronic apparatus 100 may use the artificial intelligence model and identify that the identification information is the half a potato, the first accuracy information is 83.2%, and the second accuracy information is 75.5%. Here, the electronic apparatus 100 may identify the difference value (-7.7%) by subtracting the first accuracy information from the second accuracy information. Because the difference value (-7.7%) is less than the threshold value (e.g., 10%), the electronic apparatus 100 may determine that the suitability of the artificial intelligence model is high.

If an image including the pumpkin pie is obtained, the electronic apparatus 100 may use the artificial intelligence model and identify that the identification information is the pumpkin pie, and the first accuracy information is 98%. Here, the electronic apparatus 100 may not obtain the second accuracy information and the difference value. If the number of recognitions is less than the threshold number of times, the electronic apparatus 100 may not determine the suitability of the artificial intelligence model. Descriptions associated therewith will be described in FIG. 11.

Table 1220 in FIG. 12 may include object for cooking information having a plurality of depths. A first depth may refer to a category of a widest range, a second depth may refer to a category of a range narrower than the first depth, and a third depth may refer to a category of a narrowest range.

The first depth may be classified into seafood, meat, vegetables, and the like.

Information of the second depth associated with seafood may include salmon, shrimp, or the like. The information of the third depth associated with salmon may include salmon fillets, smoked salmon, or the like. The information of the third depth associated with shrimp may include fried shrimp, and the like.

Information of the second depth associated with meat may include pork, chicken, or the like. Information of the third depth associated with pork may include barbecue or braised short ribs (galbijjim). Information of the third depth associated with chicken may include fried chicken, or the like.

Information of the second depth associated with vegetable may include tomato or garlic. Third depth information of tomato may include tomato soup, tomato stew, or the like. The third depth information of garlic may include roasted garlic, or the like.

Descriptions associated with the information of the above-described depths are merely examples, and addition classification references may be included.

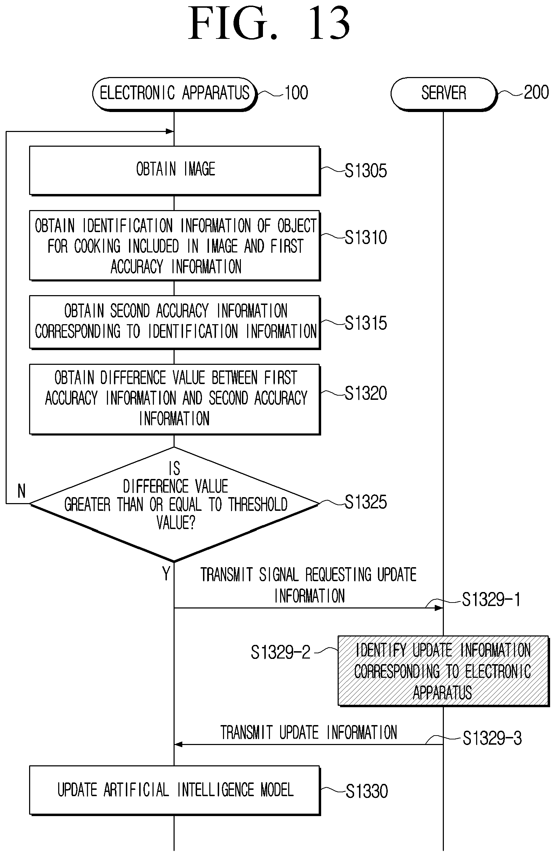

FIG. 13 is a flowchart illustrating an operation of receiving update information from the server 200.

Referring to FIG. 13, steps S1305, S1310, S1315, S1320, S1325, and S1330 may correspond to steps S1005, S1010, S1015, S1020, S1025, and S1030 in FIG. 10. Accordingly, redundant descriptions will be omitted.

If the difference value between the first accuracy information and the second accuracy information is greater than or equal to the threshold value (S1325-Y), the electronic apparatus 100 may transmit a signal requesting update information to the server 200 (S1329-1).

The server 200 may receive the signal requesting the update information from the electronic apparatus 100. Then, the server 200 may identify the update information corresponding to the electronic apparatus 100 (S1329-2). Specifically, the server 200 may store a plurality of update information associated with the artificial intelligence model. Then, the electronic apparatus 100 may identify (or obtain) update information suitable to the electronic apparatus 100 from among the plurality of update information. The server 200 may transmit the identified update information to the electronic apparatus 100 (S1329-3).

The electronic apparatus 100 may receive the update information from the server 200. Then, the electronic apparatus 100 may update the artificial intelligence model based on the received update information (S1330).

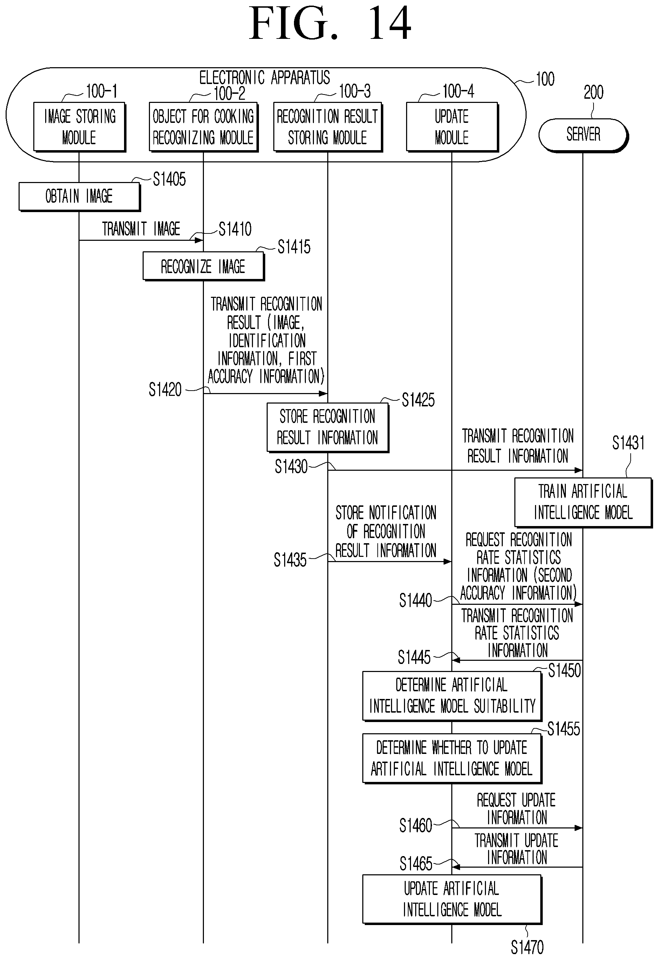

FIG. 14 is a flowchart illustrating operations of various modules included in the electronic apparatus 100.

Referring to FIG. 14, the electronic apparatus 100 may include at least one from among an image storing module 100-1, an object for cooking recognizing module 100-2, a recognition result storing module 100-3, or an update module 100-4.

The image storing module 100-1 may obtain an image (S1405). Then, the image storing module 100-1 may transmit the obtained image to the object for cooking recognizing module 100-2 (S1410).

The object for cooking recognizing module 100-2 may receive the image from the image storing module 100-1. Then, the object for cooking recognizing module 100-2 may apply the received image to the artificial intelligence model and recognize the image (S1415). The object for cooking recognizing module 100-2 may obtain the recognition result information. The recognition result information may include at least one from among the image (image obtained from step S1405), the identification information, or the first accuracy information corresponding to the identification information. The object for cooking recognizing module 100-2 may transmit the recognition result information to the recognition result storing module 100-3 (S1420).

The recognition result storing module 100-3 may store the recognition result information received from the object for cooking recognizing module 100-2 (S1425). The recognition result storing module 100-3 may additionally update (or modify) the number of times of counting the specific identification information. For example, if salmon fillets are identified in the object for cooking recognizing module 100-2, the number of times of counting the salmon fillets may be increased by +1. The recognition result storing module 100-3 may transmit the recognition result information to the server 200 (S1430). Here, the recognition result storing module 100-3 may merely generate a transmission instruction, and an actual transmission operation may be performed through the communication interface 140.

The server 200 may receive the recognition result information from the recognition result storing module 100-3. Then, the server 200 may train (or re-train) the artificial intelligence model based on the received recognition result information (S1431).

Steps S1430 and S1431 may be omitted according to the embodiment. After the recognition result information is stored, the recognition result storing module 100-3 may transmit a store notification of the recognition result information to the update module 100-4 (S1435).

If the notification (notification of step S1435) is received from the recognition result storing module 100-3, the update module 100-4 may request recognition rate statistics information (second accuracy information) to the server 200 (S1440). Here, the update module 100-4 may merely generate a request instruction, and an operation of an actual request being transmitted may be performed through the communication interface 140.

The server 200 may receive the request for the recognition rate statistics information (second accuracy information) from the update module 100-4. Then, the server 200 may transmit the recognition rate statistics information (second accuracy information) to the update module 100-4 (S1445).

The update module 100-4 may receive the recognition rate statistics information (second accuracy information) from the server 200. The update module 100-4 may determine the suitability of the artificial intelligence model based on the recognition rate statistics information (second accuracy information) (S1450). Then, the update module 100-4 may determine whether to update the artificial intelligence model according to a suitability determination result (S1455). If it is identified as updating the artificial intelligence model, the update module 100-4 may request the update information to the server 200 (S1460).

The server 200 may receive the request for update information from the update module 100-4. Then, the server 200 may transmit the update information to the update module 100-4 (S1465).

The update module 100-4 may receive the update information from the server 200. Then, the update module 100-4 may update the artificial intelligence model based on the received update information (S1470).

FIG. 15 is a flowchart illustrating an operation of the electronic apparatus 100 displaying a UI that guides an update.

Referring to FIG. 15, steps S1505, S1510, S1515, S1520, S1525, S1529-1, S1529-2, S1529-3, and S1530 may correspond to steps S1305, S1310, S1315, S1320, S1325, S1329-1, S1329-2, S1329-3, and S1330 in FIG. 13. Accordingly, redundant descriptions will be omitted.

If the difference value between the first accuracy information and the second accuracy information is greater than or equal to the threshold value (S1525-Y), the electronic apparatus 100 may display a UI that guides the update (S1526). Then, the electronic apparatus 100 may identify whether a user input for the update is received (S1527).

If the user input for the update is received through the displayed UI (S1527-Y), the electronic apparatus 100 may transmit a signal requesting the update information to the server 200 (S1529-1).

If the user input for the update is not received through the displayed UI (S1527-N), the electronic apparatus 100 may obtain a new image and perform step S1505 to step S1527.

FIG. 16 is a flowchart illustrating an operation of the terminal device 300 displaying a UI that guides an update.

Referring to FIG. 16, steps S1605, S1610, S1615, S1620, S1625, and S1630 may correspond to steps S1305, S1310, S1315, S1320, S1325, and S1330 in FIG. 13. Accordingly, redundant descriptions will be omitted.

If the difference value between the first accuracy information and the second accuracy information is greater than or equal to the threshold value (S1625-Y), the electronic apparatus 100 may transmit a signal requesting the update information to the server 200 (S1626-1).

The server 200 may receive the signal requesting the update information from the electronic apparatus 100. Then, the server 200 may determine whether the update information corresponding to the electronic apparatus 100 can be identified (S1626-2).

If the update information corresponding to the electronic apparatus 100 cannot be identified (S1626-2-N), the server 200 may not perform a separate operation or may transmit information for notifying that the update information cannot be identified to the electronic apparatus 100. The electronic apparatus 100 may display information for notifying that the update information cannot be identified.

If the update information corresponding to the electronic apparatus 100 can be identified (S1626-2-Y), the server 200 may transmit a signal requesting the user input to the terminal device 300 (S1626-3).

The terminal device 300 may receive the signal requesting the user input from the server 200. Then, the terminal device 300 may display the UI that guides the update (S1627-1).

Then, the terminal device 300 may identify whether the user input for the update is received (S1627-2).

If the user input for the update is not received through the displayed UI (S1627-2-N), the electronic apparatus 100 may wait to receive a new signal.

If the user input for the update is received through the displayed UI (S1627-2-Y), the electronic apparatus 100 may transmit the user input for the update to the server (S1627-3).

If the user input for the update is identified, the server 200 may transmit the update information to the electronic apparatus 100 (S1628).

The electronic apparatus 100 may receive the update information from the server 200. Then, the electronic apparatus 100 may update the artificial intelligence model based on the received update information (S1630).

FIG. 17 is a diagram illustrating a UI that guides an update.

Referring to FIG. 17, the electronic apparatus 100 may display a UI 1700 that guides the update. Here, the UI 1700 may include at least one from among an image 1710, an object for cooking analysis result 1720, information that guides the update 1730, or information for receiving the user input 1740.

The image 1710 may be an image that includes the object for cooking, and may be an image that is used in the artificial intelligence model as input data.

The object for cooking analysis result 1720 may correspond to table 1210 in FIG. 12.

The information that guides the update 1730 may include information associated with the update of the artificial intelligence model. Specifically, the information 1730 may include text information showing that the recognition degree for the recognized object for cooking (e.g., salmon fillets) may be improved.

The information for receiving the user input 1740 may be information for selecting the user input (`yes') for the update or the user input ('no') for not performing the update.

FIG. 18 is a flowchart illustrating an operation of receiving second accuracy information from the server 200.

Steps S1805, S1810, S1815, S1820, S1825, S1829-1, S1829-2, S1829-3, and S1830 in FIG. 18 may correspond to steps S1305, S1310, S1315, S1320, S1325, S1329-1, S1329-2, S1329-3, and S1330 in FIG. 13. Accordingly, redundant descriptions will be omitted.

After the identification information and the first accuracy information are obtained (S1810), the electronic apparatus 100 may transmit a signal requesting the second accuracy information corresponding to the identification information to the server 200 (S1811).

The server 200 may receive the signal requesting the second accuracy information corresponding to the identification information from the electronic apparatus 100. Then, the server 200 may identify the second accuracy information corresponding to the identification information (identification information recognized in the electronic apparatus 100) from among a plurality of stored information (S1812). Then, the server 200 may transmit the second accuracy information to the electronic apparatus 100 (S1813).

The electronic apparatus 100 may receive the second accuracy information from the server 200. Then, the electronic apparatus 100 obtain the second accuracy information corresponding to the transmitted identification information (S1815).

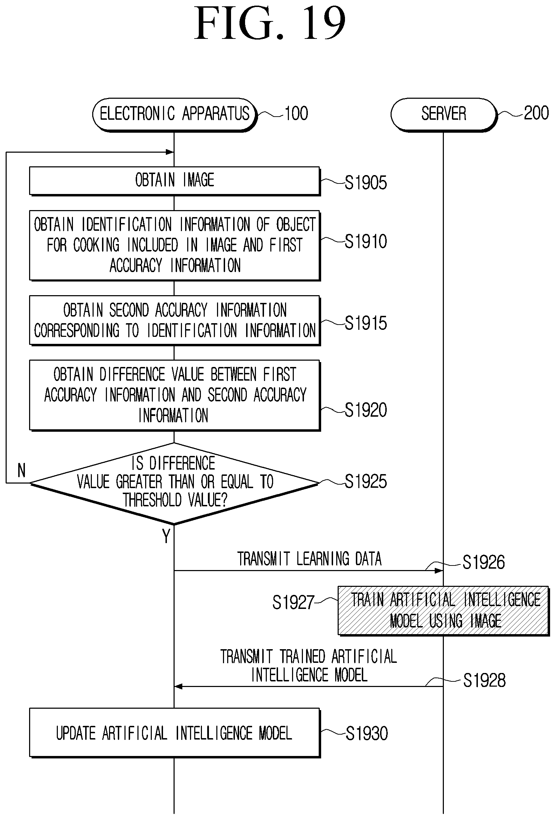

FIG. 19 is a flowchart illustrating an operation of transmitting an image to the server 200.

Steps S1905, S1910, S1915, S1920, S1925, and S1930 in FIG. 19 may correspond to steps S1305, S1310, S1315, S1320, S1325, and S1330 in FIG. 13. Accordingly, redundant descriptions will be omitted.

If the difference value between the first accuracy information and the second accuracy information is greater than or equal to the threshold value (S1925-Y), the electronic apparatus 100 may transmit learning data to the server 200 (S 1926).

According to an embodiment, the learning data may include an image (e.g., image obtained from step S1905). The electronic apparatus 100 may transmit only the image to the server so that it is simply used in the training of the artificial intelligence model. The server 200 may simply use the image received from the electronic apparatus 100 as learning data.

According to another embodiment, the learning data may include the image and the identification information. The electronic apparatus 100 may transmit both the image used in the training and the identification information analyzed by the artificial intelligence model to the server 200. The server 200 may train the artificial intelligence model taking into consideration the image and the identification information analyzed in the electronic apparatus 100.

According to still another embodiment, the learning data may include the image, the identification information, and user feedback information. The electronic apparatus 100 may display a UI including the identification information, and obtain the user feedback. Here, the user feedback may be a user input showing whether the identification information which is the analysis result of the image is accurately analyzed. The electronic apparatus 100 may receive the user feedback showing whether the identification information coincides with the object for cooking. Here, the electronic apparatus 100 may transmit the user feedback together with the image and the identification information to the server 200. The server 200 may train the artificial intelligence model taking into consideration the user feedback showing whether the analysis result (identification information) of the image is accurate.

The server 200 may receive the learning data from the electronic apparatus 100. Then, the server 200 may train (or re-train) the artificial intelligence model using the received learning data (S1927). Then, the server 200 may transmit the trained (or re-trained) artificial intelligence model to the electronic apparatus 100 (S 1928).

The electronic apparatus 100 may receive the trained artificial intelligence model from the server 200. Then, the electronic apparatus 100 may update the existing artificial intelligence model based on the artificial intelligence model trained by the server 200.

Here, the artificial intelligence model trained by the server 200 may be described as update information.

FIG. 20 is a diagram illustrating an operation of obtaining a user feedback.

Referring to FIG. 20, the electronic apparatus 100 may display a UI 2000 for obtaining the user feedback. The UI 2000 may include at least one from among an image 2010, identification information recognized from the image 2020, or information for receiving the user feedback 2030.

The image 2010 may refer to input data that is analyzed from the artificial intelligence model.

The identification information recognized from the image 2020 may refer to identification information of the object for cooking analyzed by the artificial intelligence model.

The information for receiving the user feedback 2030 may refer to a user selection item for showing whether the identification information recognized from the image 2020 matches with the actual object for cooking.

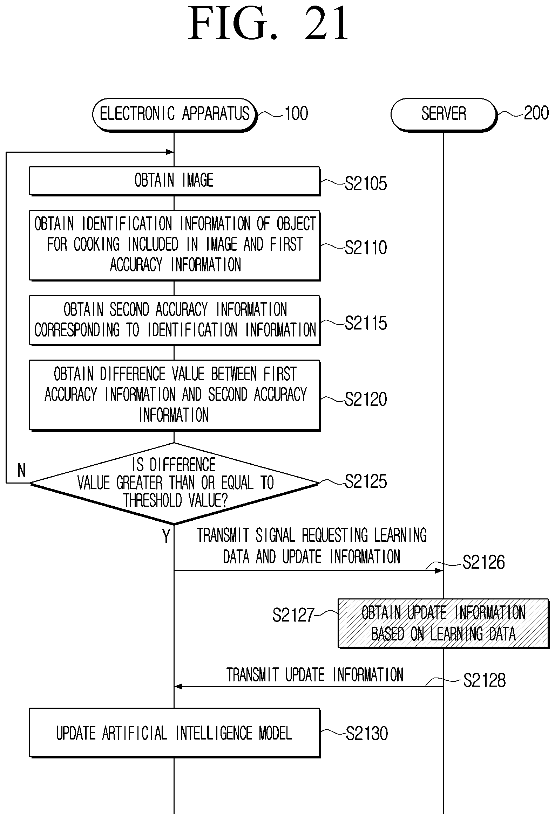

FIG. 21 is a flowchart illustrating an operation of transmitting a signal that requests an image and an update to the server 200. Steps S2105, S2110, S2115, S2120, S2125, and S2130 in FIG. 21 may correspond with steps S1305, S1310, S1315, S1320, S1325, and S1330 in FIG. 13. Accordingly, redundant descriptions will be omitted.

If the difference value between the first accuracy information and the second accuracy information is greater than or equal to the threshold value (S2125-Y), the electronic apparatus 100 may transmit a signal requesting the learning data and the update information to the server 200 (S2126).

The learning data as described in FIG. 19 may include at least one from among the image, the identification information, or the user feedback information.

The server 200 may receive a signal requesting the learning data and the update information from the electronic apparatus 100. Then, when the signal requesting the update information is received, the server 200 may obtain the update information based on the learning data (S2127).

According to an embodiment, the server 200 may identify one artificial intelligence model corresponding to the learning data from among a plurality of stored artificial intelligence models. Then, the server 200 may obtain the identified artificial intelligence model as update information.

According to another embodiment, the server 200 may update one artificial intelligence model from among the plurality of stored artificial intelligence models using the learning data. Then, the server 200 may obtain the updated artificial intelligence model as update information.

The server 200 may transmit the update information to the electronic apparatus 100 (S2128).

The electronic apparatus 100 may receive the update information from the server 200. Then, the electronic apparatus 100 may update the artificial intelligence model based on the received update information (S2130).

FIG. 22 is a flowchart illustrating an operation of performing an update by counting identification information.

Referring to FIG. 22, the electronic apparatus 100 may obtain an image (S2205). Then, the electronic apparatus 100 may obtain the identification information of the object for cooking included in the image and the first accuracy information (S2210). Then, the electronic apparatus 100 may count the identification information obtained in step S2210 (S2215).

The electronic apparatus 100 may perform the image analysis operation over a plurality of times. Here, the electronic apparatus 100 may count the identification information that is obtained over the image analysis operation. Here, the counting operation may be an operation of accumulating and calculating the number of times of counting the identification information.

The electronic apparatus 100 may identify whether the number of times of counting is greater than or equal to the first threshold number of times (S2220). If the number of times of counting is greater than or equal to the first threshold number of times (S2220-Y), the electronic apparatus 100 may transmit a signal requesting the first update information (S2225).

The server 200 may receive the signal requesting the first update information from the electronic apparatus 100. Then, the server 200 may identify the first update information corresponding to the electronic apparatus 100 (S2230). Then, the server 200 may transmit the first update information to the electronic apparatus 100 (S2235).

The electronic apparatus 100 may receive the first update information from the server 200. Then, the electronic apparatus 100 may update the artificial intelligence model based on the received first update information (S2240).

If the number of times of counting is less than the first threshold number of times (S2220-N), the electronic apparatus 100 may identify whether the number of times of counting is less than the second threshold number of times (S2245). If the number of times of counting is greater than or equal to the second threshold number of times (S2245-Y), the electronic apparatus 100 may obtain a new image and perform step S2205 to step S2245.

If the number of times of counting is less than the second threshold number of times (S2245-Y), the electronic apparatus 100 may transmit a signal requesting the second update information to the server 200 (S2250).

The server 200 may receive the signal requesting the second update information from the electronic apparatus 100. Then, the server 200 may identify the second update information corresponding to the electronic apparatus 100 (S2255). Then, the server 200 may transmit the second update information to the electronic apparatus 100 (S2260).

The electronic apparatus 100 may receive the second update information from the server 200. Then, the electronic apparatus 100 may update the artificial intelligence model based on the received second update information (S2265).

According to an embodiment, the first update information and the second update information may vary. The first update information may include update information for improving recognition of the object for cooking included in the image. In addition, the second update information may include an artificial intelligence model specialized in a specific object for cooking (identification information recognized through the image). For example, if the object for cooking with the number of times of counting being greater than or equal to the first threshold number of times is identified, the electronic apparatus 100 may perform an update operation for improving the recognition of the corresponding object for cooking. In addition, if the object for cooking with the number of times of counting being less than the second threshold number of times is identified, the electronic apparatus 100 may receive and store a new artificial intelligence model that specifically recognizes the corresponding object for cooking. A UI displaying operation associated with the first update information will be described in FIG. 23, and a UI displaying operation associated with the second update information will be described in FIG. 24.

According to another embodiment, the first update information and the second update information may be the same. The server 200 may store a recently updated artificial intelligence model. If a request associated with the update information is received from the electronic apparatus 100, the server 200 may transmit the update information including the recently updated artificial intelligence model to the electronic apparatus 100. The electronic apparatus 100 may update the existing artificial intelligence model based on the update information received from the server 200.

FIG. 23 is a diagram illustrating an operation of displaying a UI that guides an update when identification information is counted greater than or equal to a first threshold number of times.

Referring to FIG. 23, the electronic apparatus 100 may display, based on the number of times of counting the object for cooking that is identified from the image being greater than or equal to the first threshold number of times, a UI 2300 for requesting the first update information.

The UI 2300 may include at least one from among an image 2310, information for requesting the update information corresponding to the identification information 2320, or information for receiving the user input 2330.

The image 2310 may refer to input data that is analyzed in the artificial intelligence model.

The information for requesting the update information corresponding to the identification information 2320 may include at least one from among an object for cooking analyzed by the artificial intelligence model (e.g., salmon fillets), an upper category of the object for cooking (e.g., seafood), or information that guides the update for improving recognition of the analyzed object for cooking.

The information for receiving the user input 2330 may refer to a user selection item for determining whether to perform the update.

FIG. 24 is a diagram illustrating an operation of displaying a UI that guides an update when identification information is counted less than a second threshold number of times.

Referring to FIG. 24, the electronic apparatus 100 may display, based on the number of times of counting the object for cooking that is identified from the image being less than the second threshold number of times, a UI 2400 for requesting the second update information.

The UI 2400 may include at least one from among an image 2410, information for requesting the update information corresponding to the identification information 2420, or information for receiving the user input 2430.

The image 2410 may refer to input data that is analyzed in the artificial intelligence model.

The information for requesting the update information corresponding to the identification information 2420 may include at least one from among an object for cooking (e.g., barbecue) analyzed by the artificial intelligence model, an upper category of the object for cooking (e.g., meat), or information that guides the update for improving recognition of the analyzed object for cooking.

The information for receiving the user input 2430 may refer to the user selection item for determining whether to perform the update.

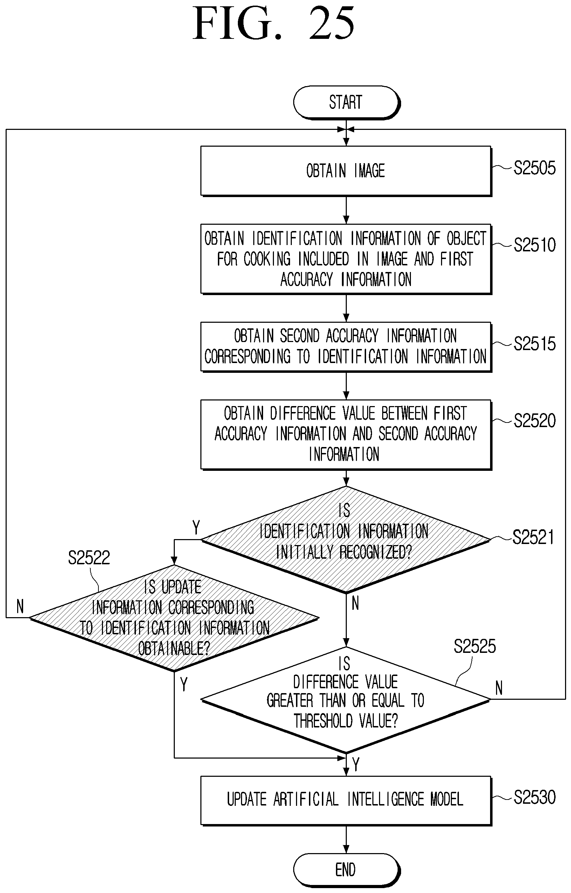

FIG. 25 is a flowchart illustrating an operation of updating an artificial intelligence model when identification information is initially recognized.

Steps S2505, S2510, S2515, S2520, S2525, and S2530 in FIG. 25 may correspond to steps S1005, S1010, S1015, S1020, S1025, and S1030 in FIG. 10. Accordingly, redundant descriptions will be omitted.

After the difference value between the first accuracy information and the second accuracy information is obtained (S2520), the electronic apparatus 100 may identify whether the identification information is initially recognized (S2521). Here, the identification information may be information that is obtained in step S2510.

If the identification information is not initially recognized (S2521-N), the electronic apparatus 100 may identify whether the difference value is greater than or equal to the threshold value (S2525). Then, if the difference value is greater than or equal to the threshold value (S2525-Y), the electronic apparatus 100 may update the artificial intelligence model (S2530). If the difference value is less than the threshold value (S2525-N), the processor 120 may repeat and perform step S2505 to S2521.

If the identification information is initially recognized (S2521-Y), the electronic apparatus 100 may determine whether the update information corresponding to the identification information can be obtained (S2522). If the identification information is initially recognized, reliability of the accuracy information that is obtained may be determined as low. Accordingly, the electronic apparatus 100 may additionally require update information corresponding to the initially recognized identification information (object for cooking).

If the update information corresponding to the identification information can be obtained (S2522-Y), the electronic apparatus 100 may obtain the update information, and update the artificial intelligence model based on the obtained update information (S2530).

If the update information corresponding to the identification information cannot be obtained (S2522-N), the electronic apparatus 100 may obtain a new image and perform step S2505 to step S2522.

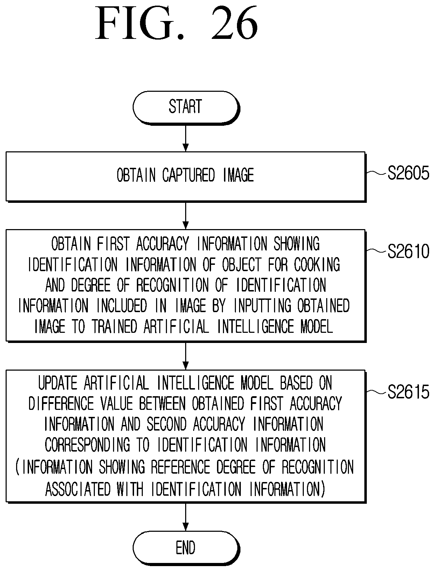

FIG. 26 is a flowchart illustrating a controlling method of an electronic apparatus.

Referring to FIG. 26, a controlling method of the electronic apparatus may include obtaining a captured image (S2605), obtaining the identification information of the object for cooking included in the image and the first accuracy information showing the recognition degree of the identification information by inputting the obtained image in the trained artificial intelligence model (S2610), and updating the artificial intelligence model based on a difference value between the obtained first accuracy information and the second accuracy information corresponding to the identification information (S2615), and the second accuracy information may be information showing a reference degree of recognition associated with the identification information.

The second accuracy information may be an average value of the accuracy value of the object for cooking obtained from the first electronic apparatus and the accuracy value of the object for cooking obtained from the second electronic apparatus from among the plurality of electronic apparatuses.

The controlling method may further include transmitting, based on the difference value between the first accuracy information and the second accuracy information being greater than or equal to the threshold value, a signal requesting the update information of the artificial intelligence model to the server, and the updating the artificial intelligence model (S2615) may include updating, based on the update information being received from the server, the artificial intelligence model based on the received update information.

The controlling method may further include displaying, based on the difference value being greater than or equal to the threshold value, a user interface (UI) that guides the update of the artificial intelligence model and transmitting, based on a user input being received through the displayed UI, a signal requesting the update of the artificial intelligence model to the server.

The UI may include at least one from among the identification information, the first accuracy information, the second accuracy information, the difference value, or information inquiring about the update of the artificial intelligence model.

The controlling method may further include transmitting, based on the identification information of the object for cooking and the first accuracy information being obtained, a signal requesting the second accuracy information corresponding to the identification information to the server and storing, based on the second accuracy information corresponding to the identification information being received from the server, the received second accuracy information.

The controlling method may further include transmitting, based on the difference value being greater than or equal to the threshold value, the obtained image to the server for the obtained image to be used in the training of the artificial intelligence model stored in the server.

The controlling method may further include transmitting, based on the identification information of the object for cooking obtained based on the plurality of captured images being counted greater than or equal to the first threshold number of times, a signal requesting the first update information of the artificial intelligence model corresponding to the identification information to the server, and the updating the artificial intelligence model (S2615) may include updating, based on the first update information corresponding to the identification information being received from the server, the artificial intelligence model based on the received first update information.

The controlling method may further include transmitting, based on the identification information of the object for cooking obtained based on the at least one captured image being counted less than the second threshold number of times, a signal requesting the second update information of the artificial intelligence model corresponding to the identification information to the server, and the updating the artificial intelligence model (S2615) may include updating, based on the second update information corresponding to the identification information being received from the server, the artificial intelligence model based on the received second update information.

The obtaining the captured image (S2605) may include obtaining the first image that captured the inside of the cooking chamber in which the object for cooking is contained from the first viewpoint and obtaining the second image that captured the inside of the cooking chamber from the second viewpoint which is different from the first viewpoint, and the obtaining the first accuracy information (S2610) may include obtaining the average value of the first accuracy value of the object for cooking that corresponds to the first image and the second accuracy value of the object for cooking that corresponds to the second image as the first accuracy information.

The methods according to the various embodiments of the disclosure described above may be implemented in an application form installable in the electronic apparatuses of the related art.

In addition, the methods according to the various embodiments of the disclosure described above may be implemented with only a software upgrade or a hardware upgrade of the electronic apparatuses of the related art.

In addition, the various embodiments of the disclosure described above may be performed through an embedded server provided in the electronic apparatus, or at least one external server from among the electronic apparatus and the display device.

Various embodiments described above may be implemented with software including instructions stored in a machine-readable storage media (e.g., computer). The machine may call an instruction stored in a storage medium, and as a device operable according to the called instruction, may include an electronic device according to the above-mentioned embodiments. Based on the instruction being executed by the processor, the processor may directly or using other elements under the control of the processor perform a function corresponding to the instruction. The instruction may include a code generated by a compiler or executed by an interpreter. The machine-readable storage medium may be provided in the form of a non-transitory storage medium. Herein, `non-transitory' merely means that the storage medium is tangible and does not include a signal, and the term does not differentiate data being semi-permanently stored or being temporarily stored in the storage medium.

In addition, a method according to the various embodiments described above may be provided included a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE^{™}). In the case of online distribution, at least a portion of the computer program product may be at least stored temporarily in a server of a manufacturer, a server of an application store, or a storage medium such as a memory of a relay server, or temporarily generated.

In addition, each of the elements (e.g., a module or a program) according to the various embodiments described above may be formed as a single entity or a plurality of entities, and some sub-elements of the above-mentioned sub-elements may be omitted, or other sub-elements may be further included in the various embodiments. Alternatively or additionally, some elements (e.g., modules or programs) may be integrated into one entity to perform the same or similar functions performed by the respective elements prior to integration. Operations performed by a module, a program, or another element, in accordance with various embodiments, may be executed sequentially, in a parallel, repetitively, or in a heuristic manner, or at least some operations may be executed in a different order, omitted or a different operation may be added.

While the disclosure has been illustrated and described with reference to various example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic apparatus comprising:
a camera; and
at least one processor configured to:
obtain, using the camera, an image captured by the camera,
input the obtained image to an artificial intelligence model that is trained,
obtain, using the artificial intelligence model, identification information of an object in the image and first accuracy information indicating a degree of recognition of the identification information, and
update the artificial intelligence model based on a difference value between the obtained first accuracy information and second accuracy information corresponding to the identification information,
wherein the second accuracy information indicates a reference degree of recognition associated with the identification information.

2. The electronic apparatus of claim 1, wherein the second accuracy information indicates the reference degree of recognition used in a training process of the updated artificial intelligence model.

3. The electronic apparatus of claim 1, further comprising:
at least one memory configured to store the artificial intelligence model; and
a communication interface configured to communicate with a server,
wherein the at least one processor is further configured to:
based on the difference value between the first accuracy information and the second accuracy information being greater than or equal to a threshold value, control the communication interface to transmit a signal requesting update information of the artificial intelligence model to the server, and
based on the update information being received from the server through the communication interface, update the artificial intelligence model based on the received update information.

4. The electronic apparatus of claim 3, further comprising:
a display,
wherein the at least one processor is further configured to:
based on the difference value being greater than or equal to the threshold value, control the display to display a user interface (UI) that guides an update of the artificial intelligence model, and
based on a user input being received through the displayed UI, control the communication interface to transmit a signal requesting an update of the artificial intelligence model to the server.

5. The electronic apparatus of claim 4, wherein the UI comprises at least one from among the identification information, the first accuracy information, the second accuracy information, the difference value, or information inquiring of an update of the artificial intelligence model.

6. The electronic apparatus of claim 3, wherein the at least one processor is further configured to:
based on the identification information of the object and the first accuracy information being obtained, control the communication interface to transmit a signal requesting the second accuracy information corresponding to the identification information to the server, and
based on the second accuracy information corresponding to the identification information being received from the server through the communication interface, store the received second accuracy information in the at least one memory.

7. The electronic apparatus of claim 3, wherein the at least one processor is further configured to:
based on the difference value being greater than or equal to the threshold value, control the communication interface to transmit the obtained image to the server to train the artificial intelligence model stored in the server.

8. The electronic apparatus of claim 3, wherein the at least one processor is further configured to:
based on the identification information of the object, which is obtained based on a plurality of captured images obtained from the camera, being counted greater than or equal to a first threshold number of times, control the communication interface to transmit a signal requesting first update information of the artificial intelligence model corresponding to the identification information to the server, and
based on the first update information corresponding to the identification information being received from the server through the communication interface, update the artificial intelligence model based on the received first update information.

9. The electronic apparatus of claim 3, wherein the at least one processor is further configured to:
based on the identification information of the object, which is obtained based on at least one captured image obtained from the camera, being counted less than a second threshold number of times, control the communication interface to transmit a signal requesting second update information of the artificial intelligence model corresponding to the identification information to the server, and
based on the second update information corresponding to the identification information being received from the server through the communication interface, update the artificial intelligence model based on the received second update information.

10. The electronic apparatus of claim 1, further comprising:
a chamber in which the object is disposed,
wherein the at least one processor is further configured to:
obtain, using the camera, a first image capturing an inside of the chamber from a first viewpoint,
obtain, using the camera, a second image capturing the inside of the chamber from a second viewpoint that is different from the first viewpoint, and
obtain, as the first accuracy information, an average value of a first accuracy value of the object corresponding to the first image and a second accuracy value of the object corresponding to the second image.

11. A controlling method of an electronic apparatus, the controlling method comprising:
obtaining an image;
inputting the obtained image in an artificial intelligence model that is trained;
obtaining, using the artificial intelligence model, identification information of an object in the image and first accuracy information indicating a degree of recognition of the identification information; and
updating the artificial intelligence model based on a difference value between the obtained first accuracy information and second accuracy information corresponding to the identification information,
wherein the second accuracy information indicates a reference degree of recognition associated with the identification information.

12. The controlling method of claim 11, wherein the second accuracy information indicates the reference degree of recognition used in a training process of the updated artificial intelligence model.

13. The controlling method of claim 11, further comprising:
based on the difference value between the first accuracy information and the second accuracy information being greater than or equal to a threshold value, transmitting a signal requesting update information of the artificial intelligence model to a server,
wherein the updating the artificial intelligence model comprises, based on the update information being received from the server, updating the artificial intelligence model based on the received update information.

14. The controlling method of claim 13, further comprising:
based on the difference value being greater than or equal to the threshold value, displaying a user interface (UI) that guides an update of the artificial intelligence model; and
based on a user input being received through the displayed UI, transmitting a signal requesting an update of the artificial intelligence model to the server.

15. The controlling method of claim 14, wherein the UI comprises:
at least one from among the identification information, the first accuracy information, the second accuracy information, the difference value, or information inquiring of an update of the artificial intelligence model.
